(19) Europäisches Patentamt / European Patent Office / Office européen des brevets

(11) **EP 4 362 359 A1**

(12) **EUROPEAN PATENT APPLICATION**
published in accordance with Art. 153(4) EPC

(43) Date of publication:
**01.05.2024 Bulletin 2024/18**

(21) Application number: **22827833.9**

(22) Date of filing: **09.08.2022**

(51) International Patent Classification (IPC):
$H04B\ 17/309^{(2015.01)}$     $H04B\ 17/373^{(2015.01)}$
$H04B\ 17/391^{(2015.01)}$     $H04W\ 16/18^{(2009.01)}$
$H04W\ 16/22^{(2009.01)}$      $H04W\ 24/06^{(2009.01)}$

(52) Cooperative Patent Classification (CPC):
**H04B 17/309; H04B 17/373; H04B 17/391;
H04W 16/18; H04W 16/22; H04W 24/06**

(86) International application number:
**PCT/IB2022/057395**

(87) International publication number:
**WO 2022/269583 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 25.06.2021   JP 2021106175
25.06.2021   JP 2021106176
25.06.2021   JP 2021106178
31.03.2022   JP 2022060306

(71) Applicant: **NTT DOCOMO, INC.**
**Tokyo 100-6150 (JP)**

(72) Inventors:
• **TOMIE, Takahiro**
  **Tokyo 100-6150 (JP)**
• **SUYAMA, Satoshi**
  **Tokyo 100-6150 (JP)**
• **ODA, Yasuhiro**
  **Tokyo 100-6150 (JP)**

(74) Representative: **Hoffmann Eitle**
**Patent- und Rechtsanwälte PartmbB
Arabellastraße 30
81925 München (DE)**

(54) **RADIOWAVE PROPAGATION ESTIMATION DEVICE, AND RADIOWAVE PROPAGATION ESTIMATION METHOD**

(57)     A radiowave propagation estimation device uses identification information enabling an object including a structure to be identified, and map data including the structure, to extract a structure of the object which is visible from both a direct or pseudo transmission point of radiowaves and a direct or pseudo reception point of the radiowaves, on the basis of the identification information. The radiowave propagation estimation device estimates a propagation characteristic of the radiowaves by using information indicating a characteristic of the extracted structure of the object.

FIG. 16

IMAGE VIEWED FROM TRANSMISSION POINT

IMAGE VIEWED FROM RECEPTION POINT

•COMMONLY VISIBLE COLOR
(WALL SURFACE OF STRUCTURE OR THE LIKE)
•PIXEL COUNT OF COMMONLY VISIBLE COLOR
−CASE VIEWED FROM TRANSMISSION POINT : $Tx_{pixels}$
−CASE VIEWED FROM RECEPTION POINT : $Rx_{pixels}$

EP 4 362 359 A1

## Description

Technical Field

The present disclosure relates to a radiowave propagation estimation device and a radiowave propagation estimation method for estimating a radiowave propagation characteristic in a radio communication system.

Background Art

In order to estimate a radiowave propagation characteristic in a radio communication system such as a mobile communication system, a ray tracing method which is based on the Geometrical theory of diffraction is widely used. Ray tracing method is a method of tracing a path of a ray from a transmission point to a reception point, and an imaging method and a ray launching method are known.

The imaging method is a method of pre-extracting structures by which a ray is reflected and diffracted, and of searching for the ray taking the shortest path from a transmission point to a reception point via such structures. Although the imaging method is advantageous in enabling rays from the transmission point to the reception point to be determined rigorously, there is a problem that the amount of computational processing increases exponentially upon increasing the number of surfaces (building wall surfaces and the like) and edges of structures to be taken into account, and the maximum reflection and diffraction counts.

Therefore, in order to reduce the amount of computational processing in the imaging method, tracing a ray by obtaining combinations of surfaces and edges only for structures within an ellipse for which the transmission point and the reception point are focal points, or tracing a ray by searching for buildings which are visible from the transmission point or the reception point has been proposed and tested (Patent Literature 1).

In addition, in order to improve the accuracy of estimating a radiowave propagation characteristic, methods that use neural networks or deep learning have also been developed (Non Patent Literature 1 and 2) .

Citation List

Patent Literature

Patent Literature 1: JP 2019-122008 A

Non Patent Literature

Non Patent Literature 1: Tetsurou Imai, Yukihiko Okumura, "A Study on Radio Propagation Prediction by Using Deep Learning", IEICE Technical Report,AP2017-165, pp. 81-86, January 2018
Non Patent Literature 2: Tetsurou IMAI, Takahiro ASAI, "A Study on Radio Propagation Prediction by Using Deep Learning with CNN - Relationship between Prediction Accuracy and Input Map-Parameters -" IEICE Technical Report , vol. 118, no. 246, AP2018-89, pp.1-6, October 2018

Summary of Invention

Technical Problem

However, the imaging method is still confronted with the following problems. For example, in tracing a single-reflection ray, when a ray Tx-Ir-Rx is discarded in cases such as where a normal reflection point Ir does not belong to a surface of a building, errors occur in calculating the power of a radiowave arriving at the reception point Rx from the transmission point Tx.

In the tracing of a reflection ray, the radiowave incident angle or the surface area of the visible portion of the building surface is sometimes reduced by the first Fresnel zone. In this case, because radiowaves are scattered not only in a normal direction but also in various directions, errors occur in calculating the power of radiowaves arriving at the reception point Rx.

On the other hand, in order to reduce such errors, it is conceivable to trace a ray diffracted by a plurality of edges of a target building and to collect the power arriving at the reception point Rx; however, there is an increase in the computational complexity required to calculate the power at the reception point Rx.

Therefore, the following disclosure was conceived in view of such a situation, and an object thereof is to provide a radiowave propagation estimation device and a radiowave propagation estimation method that enable an effective reduction in errors and computational complexity in calculating the power of radiowaves arriving at a reception point.

Solution to Problem

An embodiment of a radiowave propagation estimation device includes: an extraction unit that extracts, from map data which includes a reception point of radiowaves transmitted from a transmission point and identification information for an object including a structure, a structure of the object which is visible from both the reception point and the transmission point, on the basis of the identification information; and an estimation unit that estimates, on the basis of the structure extracted by the extraction unit, a propagation characteristic of the radiowaves from a potentially scattering structure to the radiowaves in a surrounding environment.

In addition, an embodiment of a radiowave propagation estimation device includes: an extraction unit that extracts two-dimensional data in three-dimensional map data which includes a reception point of radiowaves transmitted from a transmission point; and an estimation unit that estimates a propagation characteristic of the radiowaves together with a diffraction calculation of the radiowaves in a surrounding environment, on the basis of the two-dimensional data extracted by the extraction unit.

An embodiment of a radiowave propagation estimation device includes: an extraction unit that extracts, from the map data, a first parameter representing a potentially scattering structure to radiowaves in a surrounding environment including a reception point, by applying a convolutional neural network to map data which includes the reception point of the radiowaves transmitted from a transmission point and includes at least one of identification information and distance information for an object including a structure; and an estimation unit that estimates a propagation characteristic of the radiowaves by applying a fully connected neural network to the first parameter extracted by the extraction unit and a second parameter representing a configuration of a radio communication system that performs radio communication between the transmission point and the reception point.

An embodiment of a radiowave propagation estimation device includes: an extraction unit that extracts, by using identification information enabling an object including a structure to be identified and map data including the object, the structure of the object which is visible from both a direct or pseudo transmission point of radiowaves and a direct or pseudo reception point of the radiowaves, on the basis of the identification information; and an estimation unit that estimates a propagation characteristic of the radiowaves by using information indicating a characteristic of the structure extracted by the extraction unit.

Brief Description of Drawings

[Fig. 1] Fig. 1 is a functional block diagram illustrating a configuration example of a radiowave propagation estimation device according to a first embodiment.

[Fig. 2] Fig. 2 is a diagram to illustrate a problem of a conventional ray tracing method.

[Fig. 3] Fig. 3 is a diagram to illustrate a problem of a conventional ray tracing method.

[Fig. 4] Fig. 4 is a diagram to illustrate a problem of a conventional ray tracing method.

[Fig. 5] Fig. 5 is a diagram to illustrate a problem of a conventional ray tracing method.

[Fig. 6] Fig. 6 is a diagram to illustrate a problem of a conventional ray tracing method.

[Fig. 7] Fig. 7 is a diagram to illustrate a problem of a conventional ray tracing method.

[Fig. 8] Fig. 8 is a diagram to illustrate a problem of a conventional ray tracing method.

[Fig. 9] Fig. 9 is a diagram to illustrate a problem of a conventional ray tracing method.

[Fig. 10] Fig. 10 is a diagram illustrating identification numbers for buildings and a positional relationship between a reception point and a transmission point.

[Fig. 11] Fig. 11 is a diagram illustrating a two-dimensional image viewed from a transmission point Tx and a two-dimensional image viewed from a reception point Rx in Fig. 10.

[Fig. 12] Fig. 12 is a diagram comparing calculation using a conventional ray tracing method in three dimensions with the method of the present embodiment.

[Fig. 13] Fig. 13 is a functional block diagram according to the first embodiment.

[Fig. 14] Fig. 14 is a diagram illustrating examples of "an image viewed from the transmission point" and "an image viewed from the reception point".

[Fig. 15] Fig. 15 is a diagram illustrating a configuration example of a DNN applied to an urban structure parameter extraction unit and a propagation calculation unit 102f according to the first embodiment.

[Fig. 16] Fig. 16 is a diagram illustrating an example of an image viewed from a transmission point Tx and a reception point Rx according to a second embodiment.

[Fig. 17] Fig. 17 is a diagram illustrating imaging of a wall surface which is commonly visible from a transmission point Tx and a reception point Rx according to the second embodiment.

[Fig. 18] Fig. 18 is a diagram illustrating an example of grouping of radiowave scattering objects.

[Fig. 19] Fig. 19 is a diagram illustrating an example in which one color is assigned to one whole surface and an example in which a surface is divided into a plurality of regions (meshes) and different colors are assigned to each mesh.

[Fig. 20] Fig. 20 is a diagram illustrating an example of a case in which a radiowave is reflected once between transmission point Tx (antenna) and reception point Rx (antenna) and an example of a case in which the radiowave is reflected a plurality of times between the transmission point Tx (antenna) and the reception point Rx (antenna).

[Fig. 21A] Fig. 21A is a diagram illustrating an example of an image of a reception point, a ground surface, structures, and the like, as viewed from a transmission point.

[Fig. 21B] Fig. 21B is a diagram illustrating an example of a line-of-sight determination using a conventional ray tracing method.

[Fig. 22] Fig. 22 is a diagram illustrating an example of a method of calculating a diffracted wave.

[Fig. 23A] Fig. 23A is a diagram illustrating a configuration example of a radiowave propagation estimation device according to the second embodiment.

[Fig. 23B] Fig. 23B is a diagram illustrating a configuration example of a radiowave propagation estimation device according to the second embodiment.

[Fig. 24] Fig. 24 is a diagram illustrating an operation flow of a pre-processing unit 231 of a calculation unit 230.

[Fig. 25] Fig. 25 is a diagram illustrating an operation flow of a post-processing unit 232 in a case where a past pre-processing result is used.

[Fig. 26A] Fig. 26A is a diagram illustrating an operation flow of the pre-processing unit 231 and the post-processing unit 232 in a case where calculation is performed directly from the beginning.

[Fig. 26B] Fig. 26B is a diagram illustrating an operation flow of the pre-processing unit 231 and the post-processing unit 232 in the case where calculation is performed directly from the beginning.

[Fig. 27] Fig. 27 is a diagram illustrating an example in which reception power and propagation loss are calculated by a radiowave propagation estimation device 200.

[Fig. 28] Fig. 28 is a diagram illustrating a channel characteristic calculation example by the radiowave propagation estimation device 200.

[Fig. 29] Fig. 29 is a diagram illustrating an operation flow in which the radiowave propagation estimation device 200 captures an object not present in the radiowave scattering contributing object DB.

[Fig. 30A] Fig. 30A is a diagram illustrating examples of objects not present in the radiowave scattering contributing object DB and examples of vehicle and human body models.

[Fig. 30B] Fig. 30B is a diagram illustrating examples of objects not present in the radiowave scattering contributing object DB and examples of vehicle and human body models.

[Fig. 30C] Fig. 30C is a diagram illustrating examples of objects not present in the radiowave scattering contributing object DB and examples of vehicle and human body models.

[Fig. 31A] Fig. 31A is a diagram illustrating control imaging of a propagation characteristic at a reception point by an RIS or the like.

[Fig. 31B] Fig. 31B is a diagram illustrating control imaging of a propagation characteristic at a reception point by an RIS or the like.

[Fig. 32] Fig. 32 is a block diagram illustrating a hardware configuration example of a radiowave propagation estimation device according to an embodiment.

Description of Embodiments

Hereinafter, some embodiments of the present invention will be described in detail with reference to the drawings. Note that the following description of the embodiments is not limited to the invention disclosed in the patent claims.

Moreover, the following plurality of embodiments can be carried out by being arbitrarily combined.

[First Embodiment]

1. Summary of embodiment

In the technical field of radio communication such as mobile communication, a highly accurate estimation equation for propagation loss (sometimes referred to as "path loss") is required for an efficient cell design. As an approach for obtaining an estimation equation, for example, there exist an approach which is based on electromagnetic field theory and an approach which is based on measurement data (which may be referred to as "actual measurement data" or "actual measurement values"). Among these approaches, the latter approach, that is, the measurement data-based approach is often used in the technical field of radio communication.

For example, a propagation loss is measured by changing a frequency, a base station antenna height, a transmission-reception distance, and/or a propagation environment etc. within a range assumed in a radio communication system, and a relationship between these parameters and data obtained by the measurement is analyzed to create a radiowave propagation estimation equation.

In a case where multiple regression analysis is used for the analysis of the relationship between the parameters and the measurement data, the "input parameters" and the "functional form" constituting the estimation equation are determined. The "input parameters" means information related to a propagation environment, for example, urban structures in the case of an urban area. Note that "information related to an urban structure" may, for the sake of convenience, be referred to as urban structure parameters or urban structure-related parameters. Examples of urban structure-related parameters include a building occupancy surface area ratio, a road width, a road angle, a roadside building height, an average building height, and a building height near a base station.

Here, the determination of the parameters and the functional form of the estimation equation largely depends on the sense of the person creating the estimation equation and on the data used. In addition, the parameters and the functional form of the estimation equation need to be determined, for example, every time the relationship between the surrounding buildings height and the antenna height of the base station and/or the mobile station is different. For example, the parameters and functional form used in the estimation equation may change for each cell deployment scenario, such as the relationship between a macro cell and a small cell. For this reason, it is not easy to create a unified estimation equation by using any of the approaches described above.

Therefore, in one aspect of the present embodiment, regarding "deep learning" in determining the parameters and the functional form used in the estimation equation for radiowave propagation, the use of a deep neural network (DNN), which is an example of a neural network (NN), has been investigated.

"Deep learning" is one example of machine learning methodologies using a multilayered neural network. For example, by utilizing abundant computer resources and big data on the Internet in a multilayer neural network, processing performance such as voice recognition, image recognition, or natural language processing can be improved. One of the reasons why the processing performance can be improved is that deep learning affords the ability to learn, from input data, a feature amount itself used to solve a problem.

As described above, in a DNN, because the feature amount itself required to solve the problem can be learned from the input data, the urban structure parameters themselves which are used for radiowave propagation estimation can be learned by the DNN, for example, by using map data such as a house map as the DNN input data. Likewise, the DNN is also used to determine the "functional form" constituting the estimation equation, and hence an estimation equation affording a higher radiowave propagation estimation accuracy than existing estimation equations can be obtained.

For DNN learning, data that is transmitted (or reported) to a communication network from individual mobile stations (MS) such as mobile phones can be used. As an example of data reported from an MS to the communication network include the reception power of the MS, the position of the MS, and/or information explicitly or implicitly (or directly or indirectly) indicating the radiowave propagation environment such as the base station (BS) to which the MS is connected (has access). Note that an MS is an example of user equipment (UE).

The data reported from the mobile station to the communication network may be collected, for example, in a base station constituting the communication network and/or an upper station of the base station. A server computer (also referred to as a "cloud computer") of the data center may correspond to the upper station. For example, data collected in a data center may be stored and managed in a storage device of the data center as so-called "big data".

Therefore, "the data reported from the MS is used for DNN learning" is interchangeable with "big data related to the radiowave propagation environment is used for DNN learning". Note that data not obtained from the network may be complemented by using, for example, a simulation result obtained by ray tracing.

Here, in a case where there is a desire to learn urban structure parameters and the like used for radiowave propagation estimation by using map data such as a house map as the DNN input data, there is a problem that many iterations occur before a target parameter is obtained and that convergence is difficult. As an example, in a case where a plurality of pieces of map data viewed from a radiowave transmission point or reception point or from the sky etc. are used as input data, there is a problem that convergence is difficult until a learning result is obtained.

In one aspect of the present embodiment, the map data includes identification information (colors, identification numbers, and the like) and/or distance information for an object including a structure. More specifically, utilizing a two-dimensional image in which a color, an identification number, or the like is assigned to a surface (and/or an edge) of a building or the like, a portion of surfaces and edges of a building that are visible from both the transmission point and the reception point are extracted and used in propagation estimation (calculation). Furthermore, also utilizing a two-dimensional image (map) with computed distance information to a surface and an edge of a building that are visible from both the transmission point and the reception point, distances to the portion of surfaces and edges that are commonly visible are extracted and used in propagation estimation (calculation). As a result, even in a case where a plurality of pieces of map data are used, because the identification information and the distance information are given to the same structure, learning iterations are likely to converge, and thus it is possible to obtain a radiowave propagation estimation result of higher accuracy than conventionally, in a comparison with cases where the resources are the same.

Further, in one aspect of the present embodiment, not only in using the aforementioned neural network, but also in performing a radiowave propagation estimation calculation, the map data includes identification information (color, identification number, and the like) for an object including a structure. From the map data, a structure (a surface, an edge, or the like) of an object that is visible from both the reception point and the transmission point is extracted on the basis of the identification information. Further, on the basis of the extracted structure (surface, edge, or the like), a potentially scattering structure to radiowaves in the surrounding environment is estimated, and the radiowave propagation characteristic is estimated. As a result, by taking the identification information as a reference, it is possible to easily estimate a structure (surface, edge, or the like) of an object which is commonly visible from the reception point and the transmission point, that is, a potentially scattering structure to the radiowaves in the surrounding environment. Therefore, the calculation amount can be reduced, the speed can be increased, and it is possible to obtain a radiowave propagation estimation result of higher accuracy than conventionally, in a comparison with cases where the resources are the same.

Further, in one aspect of the present embodiment, not only in using the aforementioned neural network, but also in performing a radiowave propagation estimation calculation, two-dimensional data is extracted from map data, and a radiowave propagation characteristic together with a calculation of radiowave diffraction in the surrounding environment is estimated. Therefore, the calculation amount can be significantly reduced in comparison with a diffraction calculation in three dimensions. In addition, the diffraction calculation can be simplified to perform calculations of reflection, transmission, and the like, and hence, for the overall propagation estimation calculation, obtaining a radiowave propagation estimation result of higher accuracy than conventionally can be expected in a comparison with cases where the resources are the same.

## 2. Configuration example of Radiowave propagation estimation device

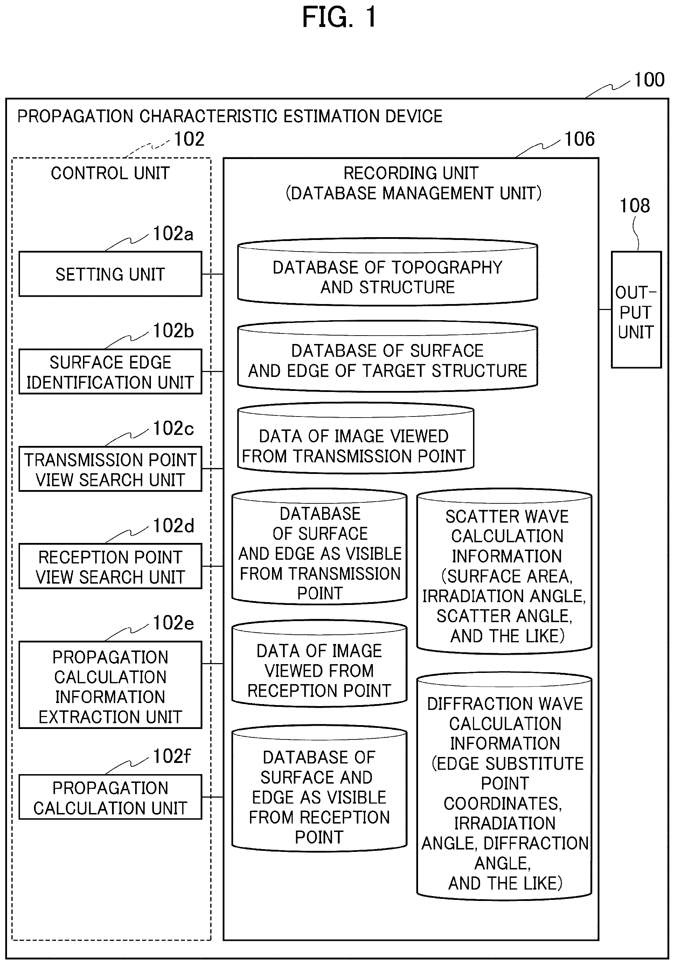

Fig. 1 is a functional block diagram illustrating a configuration example of a radiowave propagation estimation device 100 according to an embodiment. The "estimation device" is interchangeable with "simulator", "model", or "tool", or the like.

As illustrated in Fig. 1, the radiowave propagation estimation device 100 may, for example, include a control unit 102 that extracts parameters and the like for urban structures and performs a propagation estimation calculation, a storage unit 106 that includes various parameters, databases, and the like, and an output unit 108 that outputs a propagation characteristic calculation result, and the like. Here, as illustrated, the control unit 102 includes a setting unit 102a, a surface edge identification unit 102b, a transmission point view search unit 102c, a reception point view search unit 102d, a propagation calculation information extraction unit 102e, and a propagation calculation unit 102f.

The setting unit 102a is a setting means for setting various data and parameters for an estimation calculation of the propagation propagation characteristic. For example, the setting unit 102a may set identification information and distance information for an object including a structure in map data including a radiowave transmission point and reception point. As an example, the setting unit 102a may set a calculation target region, a propagation calculation parameter (example: setting of a frequency band or the like for radiowaves to be estimated), a setting rule for identification information (for example, an identification color or an identification number) for a surface or an edge of a building, and the like. Note that the setting of the identification information and the distance information for the map data and the like may be performed manually, or may be automatically assigned from a color image or a 3D image read by a camera, a distance sensor, or the like.

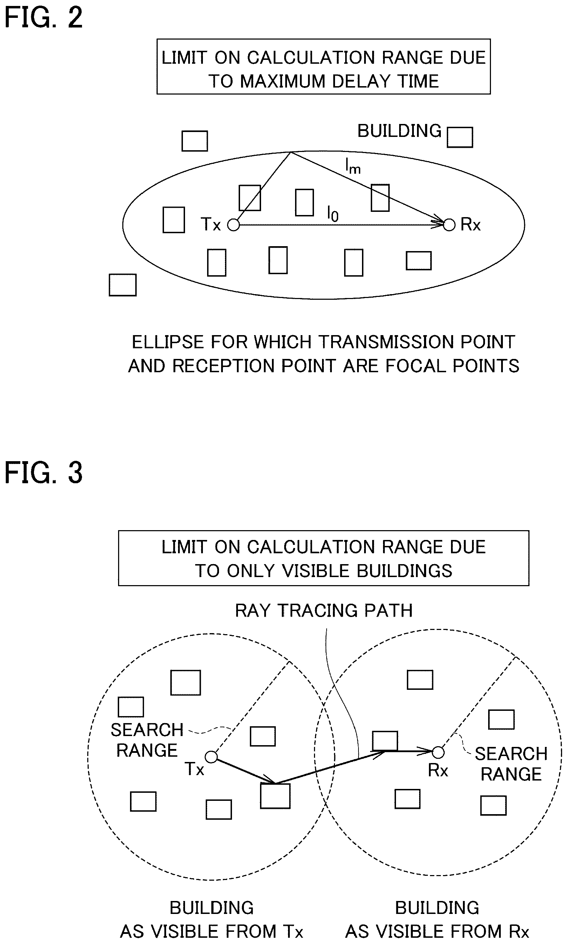

The surface edge identification unit 102b is an identification means for identifying surfaces and/or edges of a building or the like. Here, Figs. 2 to 9 are diagrams to illustrate problems of a conventional ray tracing method.

Conventionally, various methods for reducing calculation amount have been developed. For example, as illustrated in Figs. 2 and 3, in order to reduce the calculation amount of the imaging method, there are methods that have already been proposed and tested (ACE tool) such as tracing a ray to obtain combinations of surfaces and edges only for structures within an ellipse having a transmission point and a reception point as focal points, or searching for buildings that are visible from the transmission point or the reception point to trace the ray.

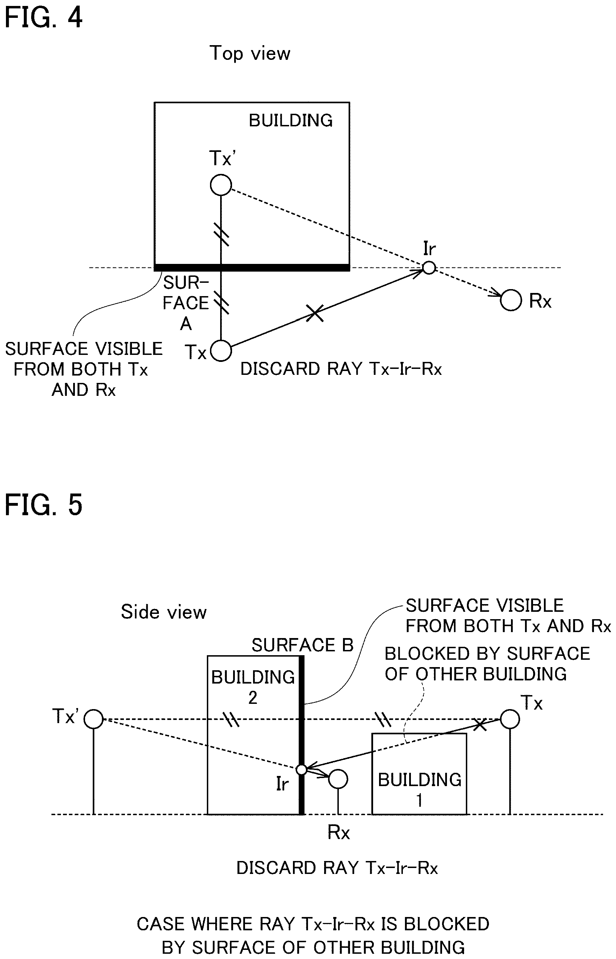

In addition, conventional methods has the problem that errors occur in the estimation accuracy. For example, in the case of single reflection in the tracing of a reflection ray in the ray tracing method, for example, as illustrated in Figs. 4 and 5, an imaging point Tx' of a transmission point Tx is created on a surface of a building, and then the imaging point Tx' and a reception point Rx are connected by a line to derive a normal reflection point Ir of the surface. In a case where the normal reflection point Ir does not belong to a surface, or in a case where the normal reflection point Ir belongs to a surface but the ray Tx-Ir-Rx is blocked by a surface of other building, the ray Tx-Ir-Rx is discarded.

However, in the real world, using a surface that is visible from both Tx and Rx, a radiowave can arrive at Rx due to waves being scattered not only in a normal direction but also in various directions. Therefore, by discarding the ray Tx-Ir-Rx, errors have occurred in calculating the power of the waves arriving at Rx.

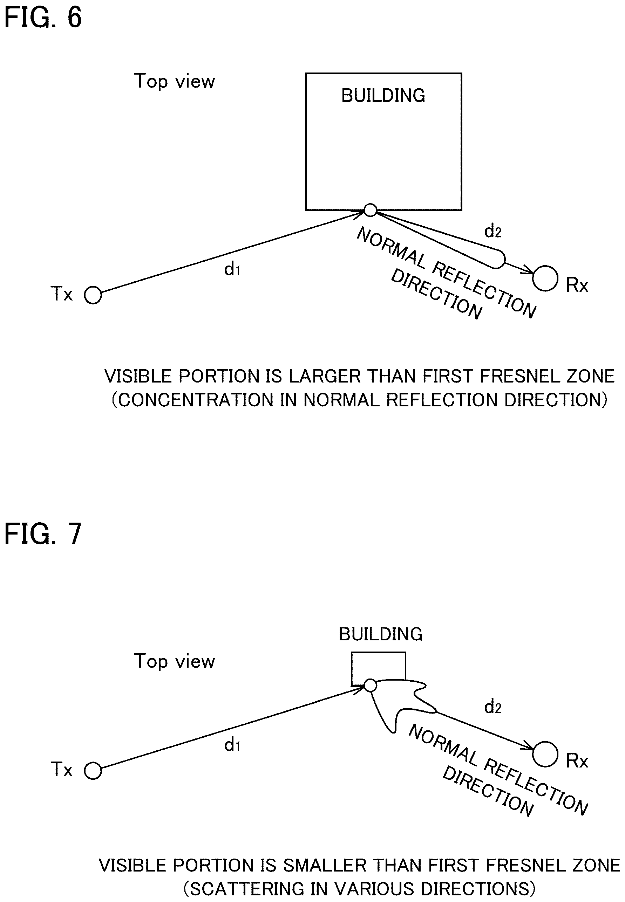

In the tracing of a reflection ray in the ray tracing method, as illustrated in Fig. 6, the reflection level in the normal reflection direction is calculated by assuming that the portion of the building surface which is visible from both the transmission point Tx and the reception point Rx is larger than in the first Fresnel zone.

[Equation 1]

First Fresnel radius

$$R_1 = \sqrt{\frac{\lambda d_1 d_2}{d_1 + d_2}}$$

However, in the real world, as illustrated in Fig. 7, the incident angle and the surface area of the visible part of the building surface may be reduced by the first Fresnel zone, and in this case, scattering occurs not only in the normal direction but also in various directions, and in the normal reflection direction, an error occurs because the level of scattering is smaller than the reflection level using the ray tracing method.

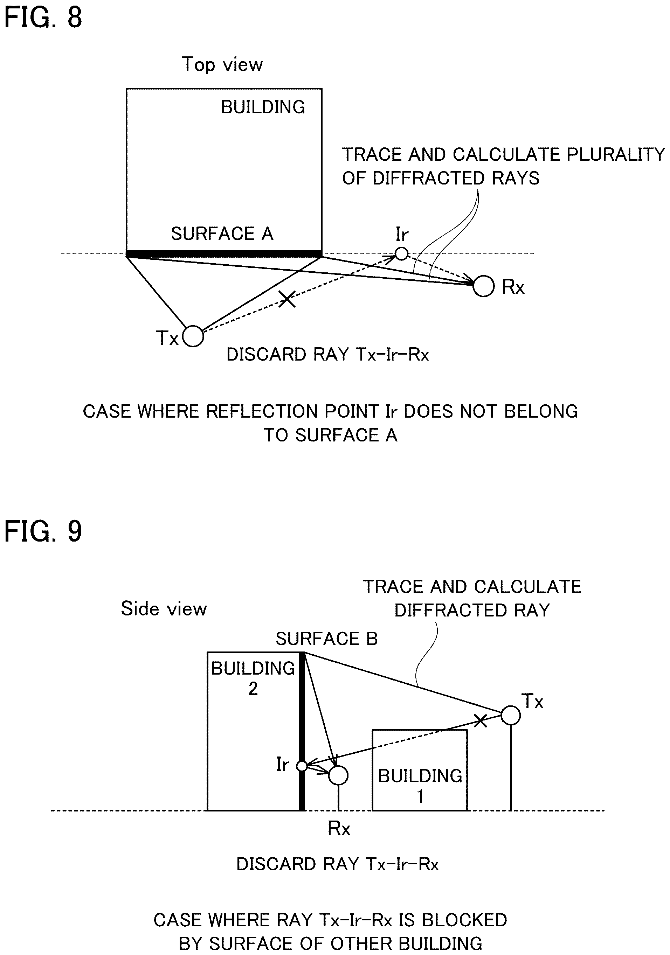

In addition, conventionally, as illustrated in Figs. 8 and 9, in a case where the normal reflection point Ir does not belong to a surface, or in a case where the normal reflection point Ir belongs to a surface but the ray Tx-Ir-Rx is blocked by a surface of other building, the ray Tx-Ir-Rx is discarded, but in reality there are radiowaves which are scattered by the building surface, and the like, and thus a calculation error occurs.

For this reason, conventionally, in order to reduce calculation errors, a calculation is performed in which a ray diffracted by a plurality of edges of a target building is traced and power arriving at the reception point is collected, but there is a disadvantage that the calculation amount increases. In addition, to begin with, there is a problem that it takes time and effort to determine the condition of the reflection point after creating the imaging point and the reflection point, and to trace the ray, and similarly, there is a problem that it takes time and effort to obtain the diffraction point and trace the ray, and to perform a calculation using a complicated mathematical expression for diffraction.

Therefore, the present embodiment proposes the following estimation method with which the calculation amount (time) can be significantly reduced in comparison with the calculation amount (time) using the conventional ray tracing method, while considering the calculation accuracy.

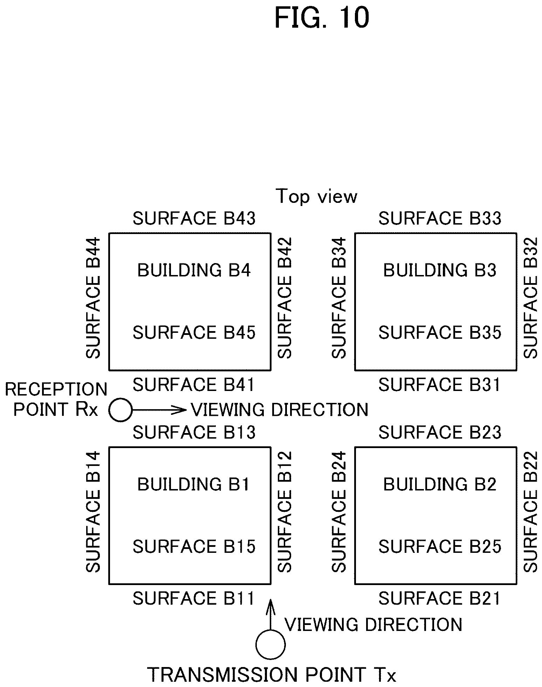

That is, the surface edge identification unit 102b performs association (mapping) using identification information (for example, colors or numbers) such that each surface and edge of each building can be identified by a two-dimensional image. Here, Fig. 10 is a diagram illustrating identification numbers for buildings and a positional relationship between a reception point and a transmission point. As illustrated in Fig. 10, after each identification color (or identification number) is assigned to a surface (and an edge) of a building or the like, a two-dimensional image of the surface and the edge of the building or the like as seen (projected) from the transmission point Tx and the reception point Rx is created in subsequent processing, and the color (or number) of each element of the image from the transmission point Tx and the image from the reception point Rx is examined. The surface (and the edge) of a building visible from the transmission point Tx or the reception point Rx can then be found.

Here, RGB hexadecimals may be used, for example, for the identification colors. Note that the identification colors are not limited to human coloring. For example, the color of buildings may be used from three-dimensional photograph data of buildings, or the like, which is stored in the topography and structure database in the storage unit 106, or a computer such as an artificial-intelligence computer may assign colors or numbers to the three-dimensional structure data of the buildings. The surface edge identification unit 102b stores, in the storage unit 106, a database of surfaces and edges of the target structures to which the identification information is assigned.

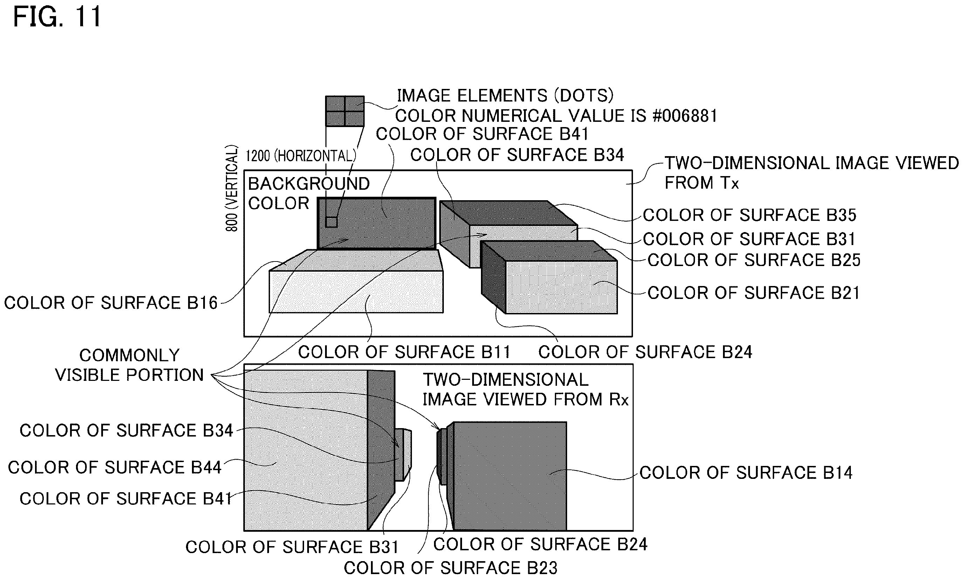

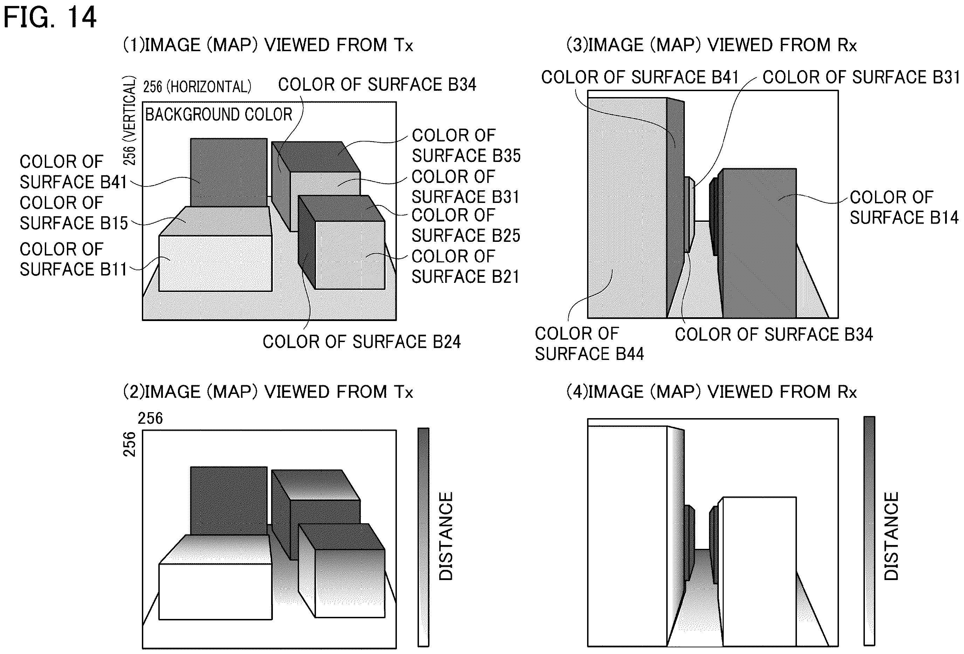

The transmission point view search unit 102c is a search means that searches for a surface and an edge of a building or the like which is visible from the transmission point. Here, as illustrated in the upper section of Fig. 11, after a two-dimensional image as viewed from the transmission point Tx is rendered in Fig. 10, the image is stored in the storage unit 106. In addition, as illustrated in the lower left section of Fig. 14, a diagram (map) of the distance from the transmission point Tx to the building is also created in Fig. 10, and an image (map) is stored in the storage unit 106. Note that these two-dimensional images may be automatically acquired by a camera or a distance sensor, and the images may be stored in the storage unit 106. Further, the color (or number) of each element of these images is examined and stored in a "database of surfaces and edges as visible from the transmission point".

The reception point view search unit 102d is a search means that searches for a surface and an edge of a building or the like which is visible from the reception point. Here, as illustrated in lower section of Fig. 11, after a two-dimensional image as viewed from the reception point Rx is rendered in Fig. 10, the image is stored in the storage unit 106. In addition, as illustrated in the lower right section of Fig. 14, a diagram (map) of the distance from the reception point Rx to the building is also created in Fig. 10, and an image (map) is stored in the storage unit 106. Note that a two-dimensional image may be automatically acquired by a camera or a distance sensor, and the image may be stored in the storage unit 106. Further, the color (or number) of each element of these images is examined and stored in the "database of surfaces and edges as visible from the reception point".

Here, on the basis of information on a building surface (and edge) visible from the transmission point Tx or the reception point Rx, the propagation calculation information extraction unit 102e extracts and processes a combination of a visible surface and edge according to conditions and information required for the propagation calculation. Therefore, it is possible to specify the surface area of the visible surface portion and the visible edge that are necessary for the calculation of the scattered (reflected, diffracted) waves by the propagation calculation unit 102f described below. Note that there is a method of calculating the surface areas of commonly visible portions by using the total number of elements (the number of pixels) of the images corresponding to these portions and the radiowave irradiation origin or the positional relationship to the observation point.

Additionally, here, the irradiation angle and the diffraction angle are calculated with respect to commonly visible edges by projecting the radiowave irradiation origin and the observation point onto surfaces perpendicular to the edges. As a result, in the diffraction calculation of a certain edge in the propagation calculation by the propagation calculation unit 102f to be described below, the irradiation angle and diffraction angle thus obtained can be substituted into a predetermined simple relational expression to obtain an attenuation amount due to diffraction. Note that, in order to perform a high-speed calculation, a uniform attenuation amount may be provided in advance without obtaining the irradiation angle and the diffraction angle.

Here, some or all of the setting unit 102a, the surface edge identification unit 102b, the transmission point view search unit 102c, the reception point view search unit 102d, and the propagation calculation information extraction unit 102e function(s) as an "extraction unit".

The propagation calculation unit 102f functions as an "estimation unit" that estimates a radiowave propagation characteristic on the basis of data extracted by the "extraction unit". For example, the propagation calculation unit 102f is capable of estimating a potentially scattering structure to radiowaves in the surrounding environment on the basis of the extracted structure (surface, edge, or the like) and of estimating the radiowave propagation characteristic.

More specifically, the propagation calculation unit 102f is capable of estimating the radiowave propagation characteristic with respect to the extraction result of a combination of a visible surface and edge satisfying the propagation condition. In addition, the propagation calculation unit 102f is capable of simplification in calculating the surface area, the irradiation angle, and the scatter angle of only the portion of the surface which is commonly visible from the radiowave irradiation origin (transmission point) and the observation point (reception point) for the wave scattering calculation. Further, the propagation calculation unit 102f calculates an irradiation angle and a diffraction angle of an edge of a building which is commonly visible from the radiowave irradiation origin (transmission point) and the observation point (reception point) for the diffracted wave calculation. Note that the propagation calculation unit 102f computes the reception power of each ray (path) and calculates the sum of the reception power.

Because the calculation can be simplified by the estimation method according to the present embodiment, it is not necessary to obtain an imaging point in the reflection, calculate a reflection point, or determine the reflection point. In addition, it is not necessary to obtain a diffraction point in the diffraction or to obtain various conditions necessary for a complicated calculation formula. It is also possible to extract conditions and information necessary for the propagation calculation at a high speed only by processing the projected image after assigning colors (or identification numbers) to the surfaces and edges. In addition, the need to calculate the surface reflection and edge diffraction can be obviated only by calculating the scattering level by using a radar equation or the like with respect to the surface that is visible from both the radiowave irradiation origin (transmission point) and the observation point (reception point). Therefore, the amount of calculation can be reduced, and high-speed estimation can be performed.

In addition, with the estimation method according to the present embodiment, it is possible to calculate scattering not only in a normal direction but also in an arbitrary direction by calculating the scattering level by using a radar equation or the like with respect to the portion of the surface that is visible from both the radiowave irradiation origin (transmission point) and the observation point (reception point). Furthermore, the scattering level can be calculated even in a case where the commonly visible portion of the surface is smaller than the first Fresnel radius (in the case of the ray tracing method, the above conditions are not calculable). Therefore, obtaining a radiowave propagation estimation result of higher accuracy than conventionally can be expected.

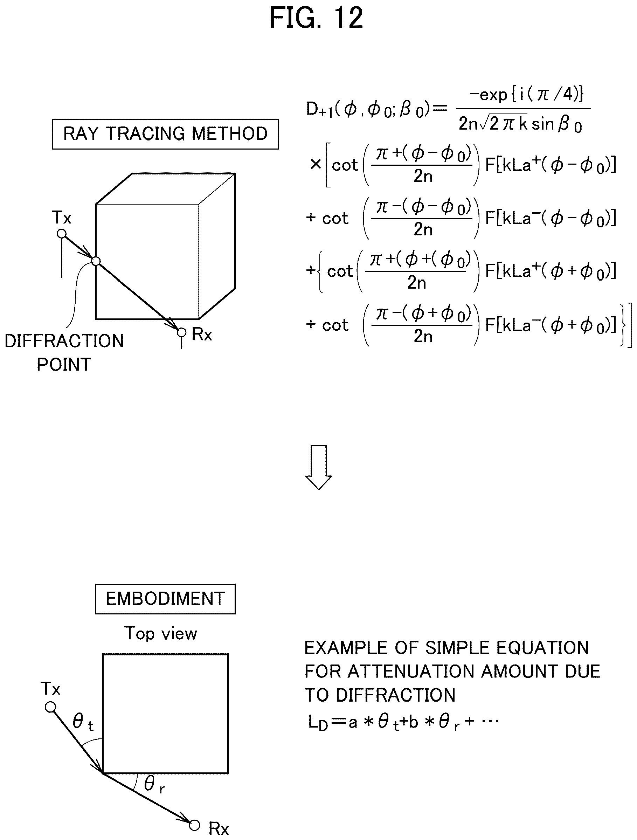

Furthermore, the propagation calculation unit 102f may estimate the radiowave propagation characteristic together with a calculation of radiowave diffraction in the surrounding environment on the basis of the extracted two-dimensional data (example: data of a perpendicular surface of an edge which is commonly visible from Tx and Rx). Here, Fig. 12 is a diagram comparing a calculation using the conventional ray tracing method in three dimensions with the method according to the present embodiment. As illustrated in Fig. 12, in the conventional ray tracing method, calculation of diffraction in a three-dimensional space is performed for a building or the like from the transmission point to the reception point, which is complicated. In the present embodiment, as described above, a calculation of diffraction in two-dimensional space is performed using two-dimensional map data of a perpendicular surface of edges which are commonly visible from the Tx and Rx, and thus the calculation is simplified. That is, the edges are projected onto perpendicular surfaces and substituted into a simple relational expression in which the irradiation angle and the diffraction angle are determined, to obtain the attenuation amount. Because the diffracted wave level is weak in the first place, the estimation accuracy can be maintained even using the simple relational expression described above. Furthermore, the amount of calculation can be reduced, and high-speed estimation can be performed.

Further, the propagation calculation unit 102f may estimate the radiowave propagation characteristic by using a neural network or the like. In particular, in the present embodiment, the propagation calculation unit 102f may function as the "estimation unit" that estimates the radiowave propagation characteristic by applying a fully connected neural network to the first parameter extracted by the "extraction unit" and to the second parameter representing the configuration of the radio communication system that performs radio communication between the transmission point and the reception point.

Note that, for example, map data such as a house map is inputted to the aforementioned "extraction unit", and the urban structure parameters used for propagation estimation can be extracted from the map data by a neural network (NN).

Urban structure parameters may include, as a non-limiting example, one or more parameters selected from among the aforementioned building occupancy surface area ratio, road width, road angle, roadside building height, average building height, and building height near a base station.

The urban structure parameters may take different values depending on, for example, the relationship between the position of the base station and/or the mobile station and the position of the surrounding buildings. In other words, the urban structure parameters are an example of first parameters representing a potentially scattering structure to radiowaves in the surrounding environment that includes the reception point (mobile station or base station) of radiowaves transmitted from the transmission point (base station or mobile station).

A convolutional NN (convolutional neural network; CNN) may be applied as the NN as a non-limiting example.

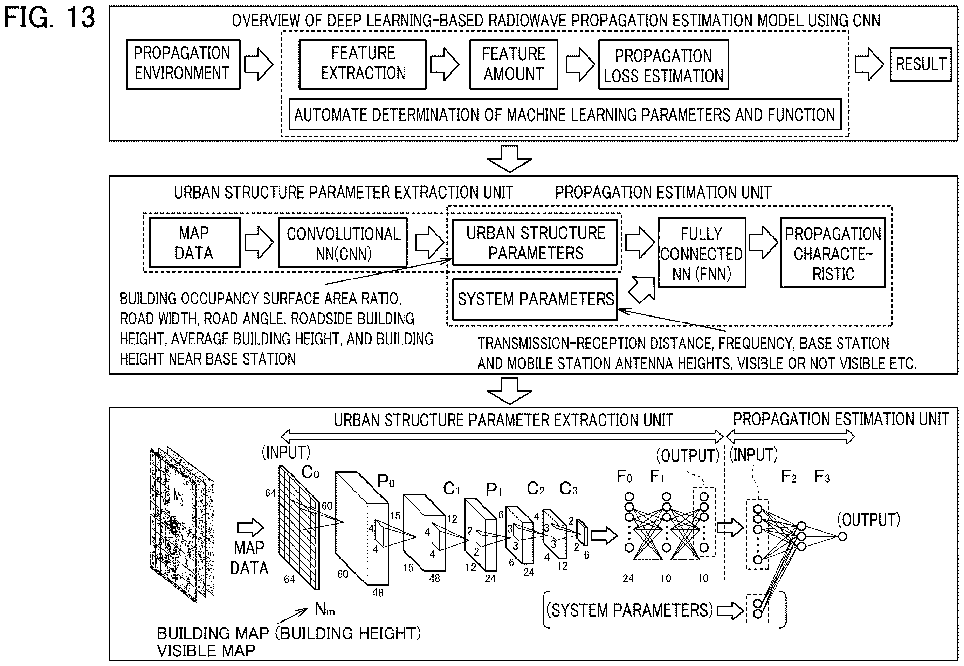

As will be described below with reference to Fig. 13, for example, a CNN has a structure in which a convolution layer that locally extracts a feature amount from input data (for example, an image) and a pooling layer that collects feature amounts locally are repeated. The pooling layer (or the sub-sampling layer) compresses (sometimes referred to as "downsampling") the input data from the convolutional layer into a format that is easy to process, for example.

In a CNN, a parameter of a convolutional filter (hereinafter sometimes abbreviated as a "filter") is shared in all places of an input image. Therefore, the number of parameters can be reduced in comparison with a simple fully connected neural network (FNN).

In addition, the number of parameters can be further reduced by the pooling layer, and at the same time, invariance with respect to translation of the input image can be imparted stepwise.

In a case where the input data is image data, the CNN can be conceptually interpreted as a network that calculates co-occurrence of adjacent feature amounts in different scales while gradually decreasing the resolution of the image data, and selectively transmits information effective for classification or identification to the next layer (upper layer).

The propagation calculation unit 102f receives, for example, inputs of the urban structure parameters extracted by the urban structure parameter extraction unit and the system parameters, and estimates radiowave propagation in the radio communication system by the NN using both the parameters. Note that the system parameters are an example of second parameters representing a configuration of a radio communication system that performs radio communication between a transmission point and a reception point. The radiowave propagation "estimation" is interchangeable with "analysis", "analyzing", "simulation", or the like.

The system parameters may include, for example, information indicating one or more items selected from a transmission-reception distance, which is the distance between the transmission point and the reception point, the frequencies of radiowaves for which radiowave propagation is to be estimated, a base station antenna height, a mobile station antenna height, and the presence or absence of a line of sight between the transmission and reception points.

The system parameters may be determined according to the system and/or scenario for which radiowave propagation is to be estimated. For example, in a case where a macrocell environment is to be estimated, it may be assumed that the base station antenna is installed in a position higher than the surrounding buildings (that is, base station antenna height > surrounding buildings height).

Furthermore, because the "frequency" is determined according to, for example, an arrangement mode (in other words, cell design) of the base station corresponding to either one of the transmission point and the reception point, the "frequency" may be understood to be included in an example of system parameters determined according to the positional relationship between the transmission point and the reception point.

For example, by applying an FNN as the NN in the propagation calculation unit 102f, a function for estimating the propagation loss from the input parameters is expressed. In an FNN, the node in each layer is connected to all the nodes of the next layer. The FNN serves as an identification unit that classifies combinations of feature amounts detected up to the lower layer into specific prediction results. Note that, in a NN, the "node" in each layer may be referred to as a "neuron" or a "unit".

The propagation calculation unit 102f may include an error calculation unit and a weight update unit (not illustrated). The error calculation unit and the weight update unit are used, for example, to learn a weight coefficient (which may be referred to as the "weight parameter") of a DNN formed by a CNN and an FNN.

In a CNN, the weight parameter can be regarded as corresponding to, for example, the filter coefficient of the convolution filter applied in the convolution layer (C layer). In an FNN, the weight parameter can be regarded as corresponding to a coefficient assigned to a weight combination between layers (in other words, between nodes of different layers) constituting the FNN. The error back-propagation method may, for example, be applied to the weight parameter learning.

The error back-propagation method is, for example, a method in which an update amount of a weight parameter of each layer is calculated using a value obtained from the upper layer side (output layer side), and a value for determining the update amount of the weight parameter of each layer is propagated, while being calculated, in the direction of the lower layer (input layer).

For example, the error calculation unit calculates an error between an estimated value of a radiowave propagation characteristic (hereinafter, sometimes abbreviated as "propagation characteristic") obtained by the propagation calculation unit 102f and a radiowave propagation characteristic obtained from an actual measurement value (may alternatively be a theoretical value). The weight update unit repeatedly updates the weight parameter of the DNN until the calculated error converges on a given convergence condition.

Note that the error calculated by the error calculation unit may be represented by, for example, an error function that takes the weight parameter as an argument. The error function may also be referred to as a loss function, a cost function, an (estimation) objective function, or the like.

For example, the gradient descent method may be applied in updating the weight parameter. In the gradient descent method, for example, the weight parameter of the DNN is iteratively updated by bringing the gradient value of the error function close to zero, in other words, bringing the partial differential value of the error function close to zero.

The middle section of Fig. 13 is a functional block diagram illustrating the functional block diagram illustrated in the upper section of Fig. 13 in an abstracted manner in comparison with the upper section of Fig. 13. In the middle section of Fig. 13, the weight parameters of the FNN and the CNN may be sequentially updated from the upper layer to the lower layer (from right to left in the middle section of Fig. 13) of the weight parameters in each layer of the DNN by the aforementioned error back-propagation method.

Batch learning or mini-batch learning may be applied to the learning of the weight parameter using the gradient descent method. In mini-batch learning, learning is performed in units obtained by dividing data used for learning (may be referred to as "learning data" or "training data") into a plurality of pieces.

With mini-batch learning, it is possible to shorten the learning time, improve computer resource utilization, and/or suppress a decrease in learning efficiency in comparison with batch learning. For example, it is useful to apply mini-batch learning in a case where big data relating to the radiowave propagation environment described above is used as learning data. Note that units obtained by dividing the learning data may be referred to as an "epochs".

The subject-matter disclosed in JP 2019-122008 A can be appropriately introduced for the calculation method using input data examples, a neural network, and the like, as used by the radiowave propagation estimation device 100 according to the present embodiment.

The map data on the far left of the lower section of Fig. 13 is a diagram illustrating an example of data (for example, map data) used for estimation of a propagation characteristic for a pair of a position of a certain BS and a position of a certain MS. In this drawing, the BS location corresponds to the transmission point and the MS location corresponds to the reception point.

Map data of a specific region (for example, a rectangular region of 128 m $\times$ 128 m) including the position of the MS corresponding to the reception point is inputted to the urban structure parameter extraction unit as illustrated in the lower section of Fig. 13.

Note that the specific region including the position of the MS is not limited to a rectangular region, and may be a circle, an ellipse, or another shape. In addition, the size of the specific region including the position of the MS may be appropriately adjusted according to, for example, the load expected for the calculation.

Furthermore, the map data inputted to the urban structure parameter extraction unit may be divided into, for example, meshes as illustrated in the lower section of Fig. 13. The size of one mesh, which is a unit of division, is, for example, 2 m $\times$ 2 m. However, the unit of division is not limited to 2 m $\times$ 2 m, and may be appropriately adjusted according to, for example, the load expected for the calculation.

In addition, the map data inputted to the urban structure parameter extraction unit may include "building map data", "line-of-sight map data", "image viewed from the transmission point", and "image viewed from the reception point". Hereinafter, the "building map data" and the "line-of-sight map data" may be abbreviated as "building map" and "line-of-sight map", respectively.

The "building map" is, for example, "map data including building height information in each mesh", and a mesh having no building is defined as 0 m. Meanwhile, the "line-of-sight map" is, for example, "map data including information on the presence or absence of a line of sight of each mesh with respect to the BS". Here, Fig. 14 is a diagram illustrating examples of the "image viewed from the transmission point" and "image viewed from the reception point".

As illustrated in Fig. 14, the map data of the present embodiment may be (1) an image viewed from transmission point to which an identification color is assigned for a structure, (2) an image viewed from the transmission point to which distance information is assigned for a structure, (3) an image viewed from the reception point to which an identification color is assigned for a structure, or (4) an image viewed from the reception point to which distance information is assigned for a structure.

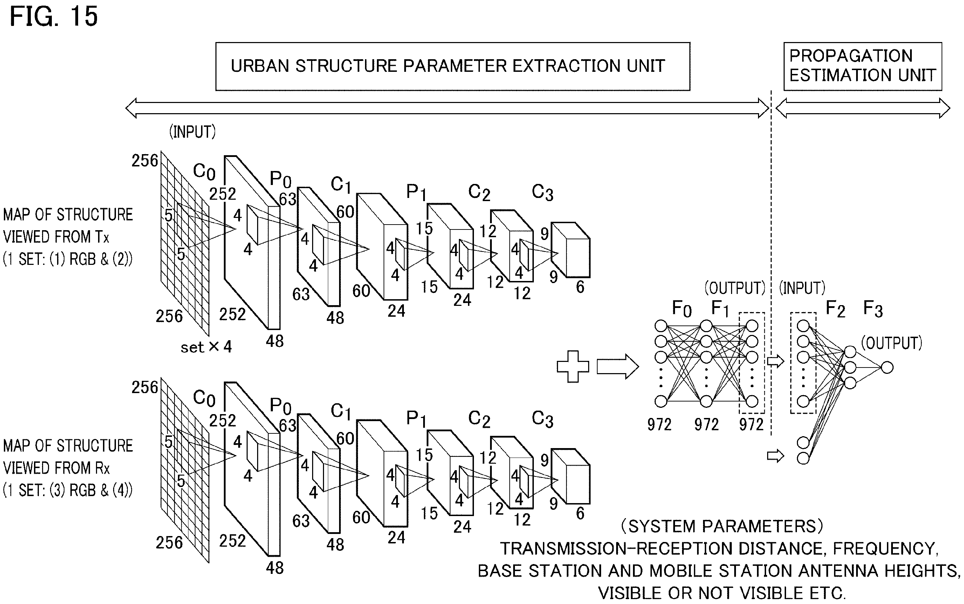

In the prior art, the propagation characteristic (propagation loss) estimation accuracy is poor (RMS error is about 10 dB). This is mainly because the range handled in the calculation is limited, and all buildings contributing to wave scattering cannot be handled, and accurate scattered power is not calculable without using information on the size of the building surface contributing to the wave scattering. According to the present embodiment, in order to improve accuracy, the following (1) to (4) images described above are inputted to the CNN as illustrated in Fig. 15, and the control unit 102 (extraction unit) uses the CNN to extract a feature amount (the size of a wall and edge portion visible from the Tx and Rx and the distance to the portion) and then input the feature amount to the FNN.

(1) Two-dimensional image (colored image) of a surface and an edge of a building or the like viewed from the transmission point Tx
(2) Distance from transmission point Tx to position corresponding to each element of image of (1) (sometimes the average distance for each surface or edge)
(3) Two-dimensional image (colored image) of a surface and an edge of a building or the like viewed from the reception point Rx
(4) Distance to position corresponding to each element in the image (3) from the reception point Rx (sometimes the average distance of each surface or edge)

3. Operation example

In a case where the operation of the radiowave propagation estimation device 100 is divided into a learning step and an estimation step after the learning ends, the big data described above may be used for learning of the CNN and the FNN in the learning step. Note that "step" is interchangeable with other terms such as "phase", "stage", "means", or "procedure".

Note that the system parameters inputted to the propagation calculation unit 102f in the learning step and the estimation step are, for example, information indicating one or both of the "transmission-reception distance D" (meters) corresponding to the distance between the BS and the MS, and the "presence or absence of a line of sight".

Note that a logarithm (logD) of the transmission-reception distance may be used as the information indicating the "transmission-reception distance D (m)". Further, a line-of-sight flag (LOS) may be used as the information indicating "presence or absence of a line of sight". The line-of-sight flag is an example of a parameter representing the presence or absence of a line of sight by means of a numerical value (for example, "1" and "0").

The input data described with reference to Fig. 3 is input data in a case where an MS corresponds to the reception point. Even in a case where a BS corresponds to the reception point, the urban structure parameters for the surrounding environment including the BS as the reception point can be extracted by inputting the map data of the specific region including the position of the BS as the reception point to the urban structure parameter extraction unit (see Fig. 15 and the like). Therefore, the radiowave propagation characteristic of the surrounding environment including the BS can be estimated.

<DNN configuration example>

Next, a configuration example of a DNN applied to the urban structure parameter extraction unit and the propagation calculation unit 102f according to the present embodiment will be described with reference to Fig. 15. As illustrated in Fig. 15, a CNN, for example, is applied to the urban structure parameter extraction unit, and an FNN, for example, is applied to the propagation calculation unit 102f.

(CNN configuration example)

The CNN includes, for example, a convolution layer (C layer), a pooling layer (P layer), and a fully connected layer (F layer).

For example, the C layer extracts a feature amount in a local pattern in the input data by performing a convolution operation on the input data using a convolution filter.

The P layer pools (in other words, aggregates) values of small regions (sometimes referred to as "local regions") in the input data into one value. Some displacement is allowed in pooling.

The F layer performs classification (or identification) which is based on the feature amounts obtained in the C layer and the P layer.

In Fig. 15, the urban structure parameter extraction unit has, as a non-limiting example, four C layers (C0 to C3), two P layers (P0 and P1), and two F layers (F0 and F1). However, the respective numbers of C layers, P layers, and F layers are not limited to the numbers illustrated in Fig. 15, and may be appropriately adjusted according to, for example, the load expected for calculation.

As illustrated in Fig. 15, for example, input data with a size of "256 × 256", for example, is inputted to the urban structure parameter extraction unit. Note that "256 × 256" represents the number of samples per map. Further, "4" added to the input data of the size of "256 × 256" represents the number of maps. For example, in the case of the transmission point, the four maps may be understood to correspond to "the map of the R component of the color of the building image viewed from the transmission point", "the map of the G component of the color of the building image viewed from the transmission point", "the B component of the color of the building image viewed from the transmission point", and "the map of the distance to the building viewed from the transmission point". In the case of the reception point, the four maps may be understood to correspond to the "map of the R component of the color of the building image viewed from the reception point", "the map of the G component of the color of the building image viewed from the reception point", "the B component of the color of the building image viewed from the reception point", and "the map of the distance to the building viewed from the reception point".

The urban structure parameter extraction unit performs a convolution operation of, for example, the filter size = "5 × 5 × the number of maps" and the number of filters = "48" in the C0 layer with respect to the input data of the size of "256 × 256 × the number of maps".

For example, the urban structure parameter extraction unit multiplies the element value of the filter represented by the three-dimensional array (in other words, the "matrix") of "5 × 5 × the number of maps" by the element value (in other words, the sample value) of the input data represented by the matrix of "256 × 256 × the number of maps" for each element value, and adds (sums) the multiplication results.

By performing such multiplication and addition while sliding the filter so as to cover the "256 × 256" range in a two-dimensional direction, a convolution operation result for the two-dimensional array of "252 × 252" is obtained. For example, this convolution operation results in map data with a size of "252 × 252", the number of which is equal to the number of filters = 48.

Note that a filter that slides with respect to input data may be referred to as a "slide window", a "kernel", a "feature detector", or the like.

Next, the urban structure parameter extraction unit performs, for example, a pooling operation in which a size of "4 × 4" is the size of the local region, on a C0-layer output (that is, "48" pieces of map data with a size of "252 × 252") in a P0 layer.

48 pieces of map data in which the size of "252 × 252" is compressed to the size of "63 × 63" are obtained through the P0-layer pooling operation. Note that either Max pooling for selecting the maximum value in a local area or Average pooling for obtaining the average value in the local area may be applied to the pooling operation. Hereinafter, an example in which Average pooling is applied will be described for the sake of convenience.

Furthermore, the urban structure parameter extraction unit performs, for example, a convolution operation of the filter size = "4 × 4 × 48" and the number of filters = "24", on a P0-layer output (that is, 48 pieces of map data with a size of "63 × 63") in a C1 layer. Map data with a size of "60 × 60", the number of which is equal to the number of filters = 24, is obtained through the C1-layer convolution operation.

Next, the urban structure parameter extraction unit performs, for example, a pooling operation in which a size "4 × 4" is the size of the local area, on a C1-layer output (that is, 24 pieces of map data with a size of "60 × 60") in the P1 layer. 24 pieces of map data in which the size of "60 × 60" is compressed to the size of "15 × 15" are obtained through the P1-layer pooling operation.

Furthermore, the urban structure parameter extraction unit performs, for example, a convolution operation of the filter size = "4 × 4 × 24" and the number of filters = "12", on a P1-layer output (that is, 24 pieces of map data with a size of "15 × 15") in the C2 layer. Map data with a size of "12 × 12", the number of which is equal to the number of filters = 12, is obtained through the C2-layer convolution operation.

Next, the urban structure parameter extraction unit performs, for example, a convolution operation of the filter

12

size = "4 × 4 × 12" and the number of filters = "6", on a C2-layer output (that is, 12 pieces of map data with a size of "12 × 12") in the C3 layer. Map data with a size of "9 × 9", the number of which is equal to the number of filters = 6, is obtained through the C3-layer convolution operation.

The urban structure parameter extraction unit performs the convolution operation and the pooling operation as described above on each of the two map sets (4 maps) of "the map of the structure viewed from the transmission point Tx" and "the map of the structure viewed from the reception point Rx", and then obtains 972 (9 × 9 × 6 × 2) pieces of data by summing the respective numbers of 486 (9 × 9 × 6) samples of the C3-layer output.

The urban structure parameter extraction unit then inputs the data of the 972 samples to the F0 layer, which is fully connected to the 972 F1 layers, thereby outputting 972 pieces of data (in other words, 972 types of data) from the F1 layer as a final output by the CNN.

As described above, the urban structure parameter extraction unit is capable of obtaining values of 972 types of urban structure parameters from the map data of the number of samples = 256 × 256 × the number of maps × 2 sets .

Note that the input data size to the CNN, and the filter size and/or the number of filters applied to each of the C layer (C0 to C3), the P layer (P0 and P1), and the F layer (F0 and F1) are not limited to the aforementioned numerical values. For example, these numerical values may be appropriately adjusted according to the load expected for calculation, and so forth.

(FNN configuration example)

Meanwhile, the FNN applied to the propagation calculation unit 102f may include three layers, namely, an input layer, an intermediate layer, and an output layer as illustrated in Fig. 15.

The urban structure parameters obtained by the urban structure parameter extraction unit and the aforementioned system parameters (for example, the transmission-reception distance: logD, and the presence or absence of line-of-sight: LOS) are inputted to the input layer. Therefore, the number of input parameters to the FNN constituting the propagation calculation unit 102f is "974". The numbers of nodes in the intermediate layer and the output layer are "3" and "1", respectively.

In the FNN configuration, an estimated value for the propagation characteristic (for example, the propagation loss) is obtained by twice fully connected NNs using two F layers (F2 and F3).

(Activation function)

Next, the activation function $f(x)$ applied to the C layer and the F layer will be described. Note that "x" represents a local region index. For example, the ReLU function may be applied to each of the C layers (C0 to C3). Note that "ReLU" is an abbreviation for "Rectified Linear Unit".

In contrast, for example, a sigmoid function may be applied to each of the F0 to F2 layers among the F layers (F0 to F3).

An identity function: $f(x) = x$ may be applied to the F3 layer, for example.

<DNN learning method>

As described above, the back-propagation method may be applied to the learning of weight parameters. Here, as the scale of the DNN increases and the amount of learning data grows larger, the time required for DNN learning tends to become longer.

Therefore, the DNN learning time can be shortened by applying the mini-batch gradient descent method to the DNN learning. The mini-batch gradient descent method is a method of updating a weight parameter by using the gradient descent method for every n(<N) samples (in other words, a mini-batch) with respect to learning data for which the number of samples is N. In order to increase the convergence of the weight parameter, adaptive moment estimation (Adam), which is one example of optimization methods, may be used in combination.

<P-Layer pooling operation>

As described above, the P layer downsamples and compresses the information in order to transform input data to an easy-to-handle format. By compressing information, effects such as improvement of robustness against a minute positional change, suppression of over-learning, and/or reduction of calculation cost can be expected.

In MAX pooling, the maximum value is selected for a local area. For example, in a DNN, the value of the node having the maximum value among the plurality of nodes in the lower layer connected to the node(s) in the upper layer is the output value of the node in the upper layer.

In other words, in MAX pooling, subsampling is performed while the feature amounts of the plurality of nodes in the lower layer are treated as the "maximum values" among the plurality of nodes. From the viewpoint of a neuron pool, it can be said that MAX pooling is a structure in which the maximum values of the pool are outputted "in a concentrated manner" from a neuron pool constituted by a plurality of lower-layer neurons, and the concentration of the neuron pool is reproduced.

For example, when a target is a data set with the characteristics that most of the values of the nodes in the lower layer are "0" and only some of the data sets have valid values, MAX pooling enables unnecessary inputs to be separated more efficiently than average pooling. In other words, it can be said that MAX pooling has a higher performance as a noise filter than average pooling.

On the other hand, in average pooling, the value outputted from a plurality of lower-layer nodes to an upper-layer node is not the maximum value, but rather, the average value. From the viewpoint of a neuron pool, if there is no fluctuation in the sum of neurons in the lower layer or the fluctuation is negligible, the noise filter functions adequately.

In average pooling, a value of a neuron having a value smaller than the maximum value is not ignored as is the case with MAX pooling, and hence, for example, the possibility of running into a local minimum problem can be reduced in comparison with MAX pooling. Note that the "local solution problem" signifies, for example, a phenomenon in which the system converges on a partial optimal solution and does not reach a true optimal solution.

For the operation of the radiowave propagation estimation device 100 having the aforementioned configuration, particularly for learning and an estimation calculation, and the like, known methods such as that disclosed in JP 2019-122008 A can be used.

As an example, in the radiowave propagation estimation device 100, for example, the urban structure parameter extraction unit calculates urban structure parameters from the acquired map data, and the propagation calculation unit 102f calculates the propagation characteristic as described with reference to Fig. 15 by using the urban structure parameters, the system parameters, and the like in Fig. 15.

When the propagation characteristic is calculated, the radiowave propagation estimation device 100 may use the error calculation unit to calculate, for example, an error between an estimated value for the calculated propagation characteristic (for example, the propagation loss) and a propagation characteristic obtained on the basis of an actual measurement value (alternatively, a theoretical value may be used) related to the propagation characteristic. Note that the actual measurement value (or theoretical value) related to the propagation characteristic may be obtained on the basis of, for example, information (in other words, big data) related to the radiowave propagation environment between the BS and the MS, which is stored in the center DB 400 described above.

The error calculation unit then determines whether the calculated error has converged on a given convergence condition. If the calculated error has not converged on the given convergence condition, for example, the weight update unit updates the weight parameters of the FNN and the CNN constituting the DNN by using the back-propagation method.

After the weight parameter is updated, the urban structure parameter extraction unit and the propagation calculation unit 102f recalculate the urban structure parameter and the propagation characteristic, respectively, and the error calculation unit calculates the error again and determines a convergence condition.

By repeating the above processing until it is determined that the convergence condition is satisfied, the weight parameters of the FNN and the CNN constituting the DNN are updated. In a case where it is determined that the convergence condition is satisfied, the radiowave propagation estimation device 100 may end the learning step processing.

In the estimation step, the radiowave propagation estimation device 100 sets, for example, a radiowave-propagation estimation condition. The setting of the estimation condition may, for example, be performed in the urban structure parameter extraction unit.

The setting data for the estimation condition may, for example, include information on a transmission point corresponding to the BS to which the MS can connect and information on a reception point corresponding to the MS.

Furthermore, the radiowave propagation estimation device 100 acquires, for example, map data (for example, a building map and a line-of-sight map) to be inputted from a DB of map data to the CNN, as illustrated in Fig. 15.

Furthermore, the radiowave propagation estimation device 100 sets, for example, parameters (for example, a weight parameter) used for radiowave propagation estimation for each layer constituting a DNN. The setting may be performed by the urban structure parameter extraction unit, for example.

In other words, the urban structure parameter extraction unit may have a function as a setting unit that sets parameters used for radiowave propagation estimation.

Next, the radiowave propagation estimation device 100 uses, for example, the urban structure parameter extraction unit that has learned in the learning step to calculate the urban structure parameters from the acquired map data as described with reference to Fig. 15.

When the urban structure parameters are calculated, the radiowave propagation estimation device 100 uses, for example, the propagation calculation unit 102f that has learned in the learning step to calculate the propagation characteristic, as described with reference to Fig. 15, by using the urban structure parameters, the system parameters, and the like.

As described above, with the radiowave propagation estimation device 100 according to an embodiment, the urban structure parameter extraction unit using the CNN is capable of extracting and determining urban structure parameters contributing to the radiowave propagation estimation from map data such as, for example, a house map by restricting the extraction and determination to structures and the like visible from the reception point and/or the transmission point. Therefore, the determination of the urban structure parameters to be used for the radiowave propagation estimation can be simplified to shorten the time required for the radiowave propagation estimation, and thus the estimation can be performed more accurately than a calculation using the same resources.

Note that the learning accuracy of the DNN can be improved by using, for example, information (for example, big data) related to the radiowave propagation environment, as reported by the MS to the network, for the learning of the DNN (CNN and FNN) used by the urban structure parameter extraction unit and the propagation calculation unit 102f. Because the learning accuracy of the DNN can be improved, the estimation accuracy of the propagation characteristic can also be improved.

[Second Embodiment]

Next, an embodiment in which identification information (identification numbers or colors) is assigned to surfaces (and edges) of a structure and used in a propagation calculation will be further described. Hereinafter, parts which are different from those of the first embodiment will be mainly described, and description of similar parts will be omitted.

Specifically, a radiowave propagation estimation device (and a radiowave propagation estimation method) capable of calculating reflected (scattered) waves in an arbitrary direction on a wall surface of a structure or the like will be described.

(Feature 1)

In order to search for a wall surface of a structure or the like by which radiowaves are reflected (scattered) in an arbitrary direction, different identification numbers or colors are assigned to surfaces of all objects (may include road signs, utility poles, street lamps, furniture, and the like) including a structure.

The radiowave propagation estimation device according to the present embodiment renders an image of a structure or the like which is visible from both directions of a radiowave transmission point and a radiowave reception point, and counts the number of pixels of each color (corresponding to wall surfaces) which are commonly visible. The number of pixels thus counted corresponds to the surface area of the portion of a wall surface which is commonly visible from the transmission point Tx and the reception point Rx, and changes depending on the wall surface distance and the angular relationship between the transmission point Tx and the reception point Rx. Thus, a result obtained by multiplying the number of pixels of the images from both the transmission point Tx and the reception point Rx is proportional to the strength (reception power) of the received radiowaves at the wall surface.

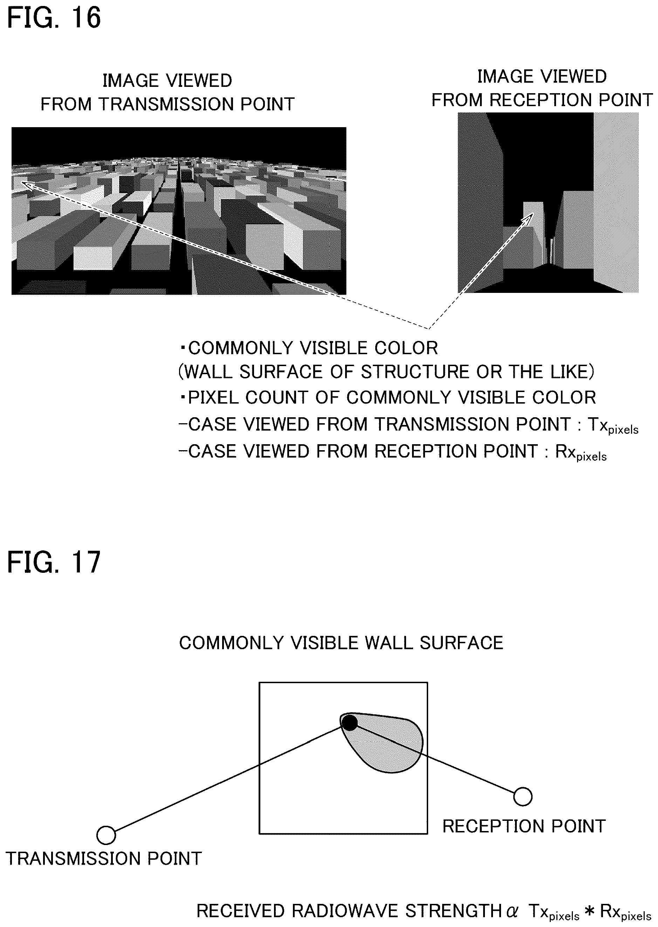

Fig. 16 illustrates an example of an image viewed from the transmission point Tx and the reception point Rx. Fig. 17 illustrates imaging of a wall surface which is commonly visible from the transmission point Tx and the reception point Rx. Note that the image may be created using a computer, but may also be a still image or a moving image of an object such as a structure acquired using a camera or the like.

As illustrated in Figs. 16 and 17, the radiowave propagation estimation device detects a color (here, specifying a wall surface of a structure such as a building) which is commonly visible from the transmission point Tx and the reception point Rx, and counts the number of pixels of the detected color which are commonly visible. The number of pixels (corresponding to the surface area of the visible portion) viewed from the transmission point Tx and the reception point Rx may be expressed as follows.

-When viewed from transmission point Tx: Tx_pixels
·When viewed from reception point Rx: Rx_pixels

As illustrated in Fig. 17, a surface of a structure (a wall surface of a building or the like) to which the same color is applied is commonly visible from the transmission point Tx and the reception point Rx. The strength (which may be interpreted as reception power) of the radiowaves received at the reception point Rx via such a wall surface can be expressed as follows.

$$\text{Received radiowave strength} \propto \text{Tx\_pixels} * \text{Rx\_pixels}$$

Alternatively, the received radiowave strength may be expressed as follows.

```
Received radiowave strength Pr = k * Tx_pixels * Rx_pixels
```

Note that a coefficient of proportionality (k) is not limited to a constant. The coefficient of proportionality may be a function of antenna gain, distance, angle, constant of scattering object material, frequency, and so forth.

A method of calculating (estimating) the received radiowave strength by using colors that enable unique identification of a surface of a structure which is commonly visible from the transmission point Tx and the reception point Rx is referred to here as a color imaging method.

Note that identification information for identifying an object (specifically, the surface of the object) which includes a structure may be a color or a number. RBG may typically be used as the color expression format, but other formats (for example, CYMK) may be used.

Structures may typically include, but are not limited to, constructions (buildings) including buildings and the like. Specifically, all objects that contribute to reflection (scattering) of radiowaves, for example, road signs, utility poles, street lamps, furniture, and the like may also be included. Further, not only stationary objects but also moving objects such as vehicles may be included.

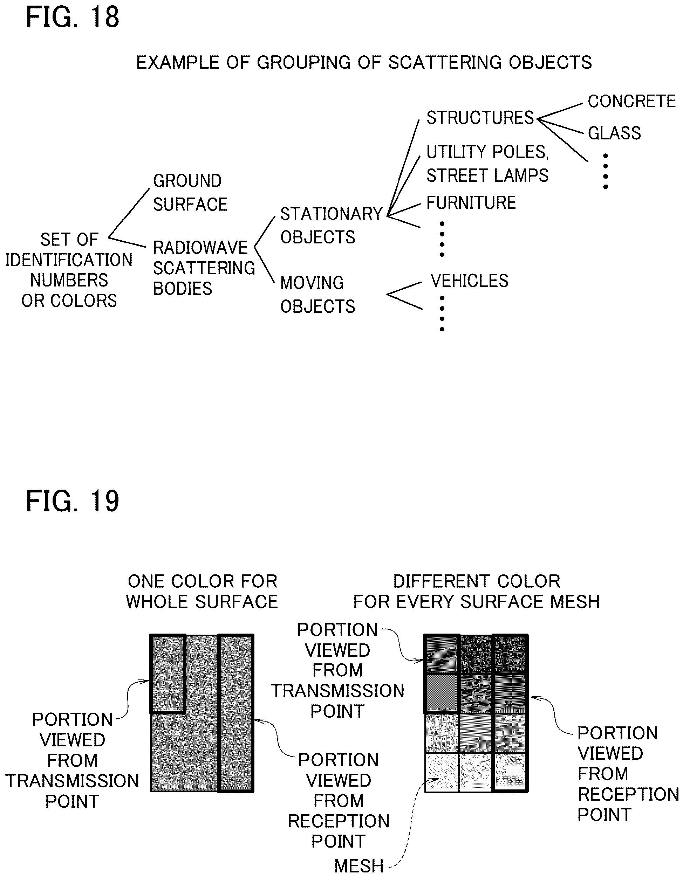

Fig. 18 illustrates an example of grouping of radiowave scattering objects. As illustrated in Fig. 18, the identification information (numbers or colors set) may be divided into a ground surface and radiowave scattering objects, and the radiowave scattering objects may be divided into stationary objects and moving objects.

Stationary objects may include structures, utility poles, street lamps, furniture, and the like described above, and moving objects may include vehicles and the like (which may include railways).

Examples of methods for assigning the identification numbers or colors (identification information) include a method in which the identification numbers or colors are randomly assigned to individual surfaces. Alternatively, examples of methods also include a method in which objects are grouped according to the type of radiowave scattering object and randomly allocated to individual surfaces of objects belonging to the same group. Note that the identification information is not necessarily randomly assigned.

Usually, one identification number or color is assigned to one whole surface, but in some cases, one surface may be divided into a plurality of regions (for example, a mesh shape), and an identification number or color may be assigned to each mesh.

Fig. 19 illustrates an example in which one color is assigned to one whole surface and an example in which a surface is divided into a plurality of regions (meshes) and different colors are assigned to each mesh.

As illustrated in Fig. 19 (left side), usually, a specific color may be assigned to one whole surface. On the other hand, as illustrated in Fig. 19 (right side), a surface may be divided into a plurality of regions (meshes), and different colors may be assigned to each mesh.

In a case where a specific color is assigned to the whole surface, because the whole surface is colored by one color, even when portions viewed from the transmission point Tx and the reception point Rx do not actually overlap, it is determined that the whole surface is commonly visible, and an error occurs in the calculation of the radiowave scattering level.

On the other hand, in a case where the surface is divided into a plurality of regions (meshes), there is no mesh which is commonly visible from both the transmission point Tx and the reception point Rx when viewed in the color of the mesh units (right side in Fig. 19), and hence no error occurs in the calculation of the radiowave scattering level as described above.

The transmission point Tx and the reception point Rx typically mean the installation position of the transmission antenna and the installation position of the reception antenna, but are not necessarily limited to the installation positions of the antennas. For example, in a case where radiowaves are reflected (scattered) a plurality of times, a pseudo transmission point and pseudo reception point may be included.

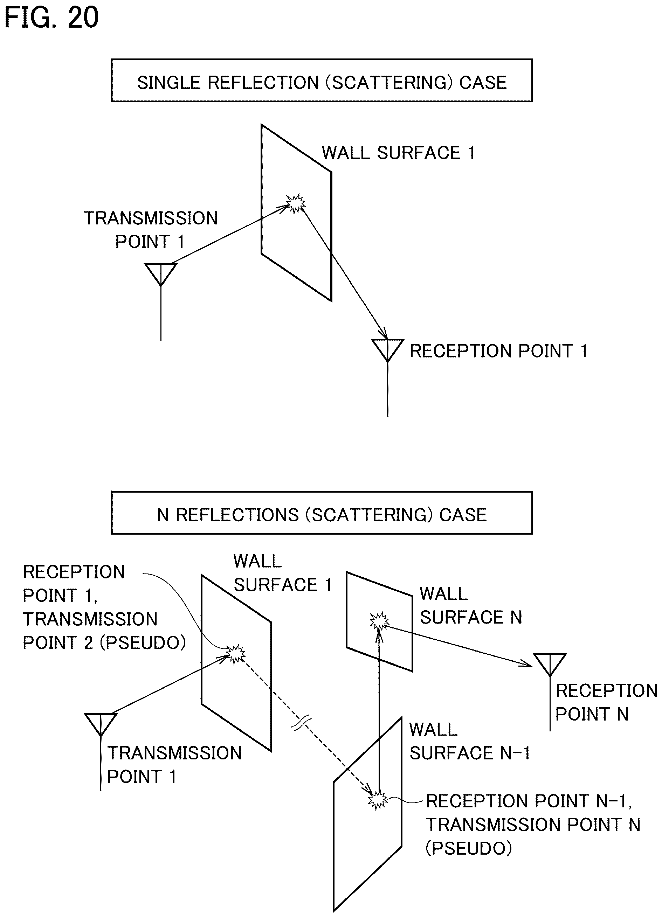

Fig. 20 illustrates an example of a case where a radiowave is reflected once between the transmission point Tx (antenna) and the reception point Rx (antenna) and an example of a case where a radiowave is reflected a plurality of times between the transmission point Tx (antenna) and the reception point Rx (antenna).

As illustrated in Fig. 20, in a case where a radiowave (which is interchangeable with the term radio signal) reaches the reception point Rx (antenna) from the transmission point Tx (antenna) via a plurality of wall surfaces, the wall surface 1, the wall surface N-1, and the like may be interpreted as a pseudo reception point and/or transmission point.

(Feature 2)

In order to quickly determine the line-of-sight state between the transmission point Tx and the reception point Rx, an identification number or a color may also be assigned to the ground surface. Specifically, the radiowave propagation estimation device may create images of the reception point Rx, the ground surface, structures, and the like as viewed from the transmission point Tx, and, in a case where the color (or identification number) of the pixel to which the reception point Rx belongs matches the color (or identification number) of the visible ground surface, determine that there is a line-of-sight state between the transmission point Tx and the reception point Rx.

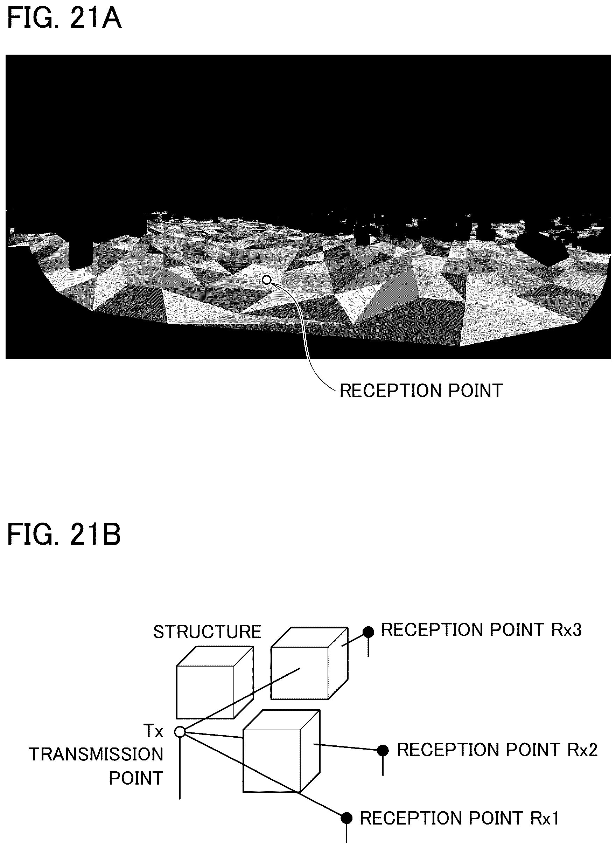

Fig. 21A illustrates an example of an image of the reception point, the ground surface, structures, and the like, as viewed from the transmission point. Fig. 21B illustrates an example of a line-of-sight determination using a conventional ray tracing method.

Note that one identification number or color is not necessarily assigned to the ground surface, and the ground surface may be divided by a mesh, and the identification number or color may be assigned to each mesh. As a result, if only one image viewed from the transmission point is analyzed, the line-of-sight state of the reception point in the whole evaluation target area can be determined.

As illustrated in Fig. 21A, the ground surface may be divided into a plurality of regions, and colors (or identification numbers) enabling unique identification of each region are assigned. In Fig. 21A, the same color (black here), which is different from that of the ground surface, is assigned to structures and the background.

Fig. 21A illustrates an image (topographical diagram) viewed from the transmission point, and the reception point illustrated in Fig. 21A is determined to be in a line-of-sight state with the transmission point.

On the other hand, as illustrated in Fig. 21B, in the line-of-sight determination by the conventional ray tracing method, a line is connected to the transmission point for each reception point (RX1, 2, 3), and whether or not each structure blocks the line is sequentially checked, and hence it takes time to make the determination.

(Feature 3)

The maximum number of reflections (scattering) that can be calculated by the radiowave propagation estimation device naturally has a limit (maximum N times) in consideration of time and so forth. Therefore, a case is assumed where a reception point for which the reception strength is not calculable even with N reflections (scattering), that is, where no surface of an object which is commonly visible can be found. In order to deal with such a case, the radiowave propagation estimation device may calculate the propagation characteristic such as the reception strength by using a complementary calculation method.

Specifically, the radiowave propagation estimation device may use the following complementary calculation method.

(1) Set a reception strength default value

(2) Change (increase) the height of the transmission point so that the target reception point is calculable, obtain a statistic for the difference in the calculation result at another calculable reception point both before and after the change, that is, the so-called average value and the standard deviation value, and calculate (estimate) the reception strength before the change by using the average value and the standard deviation value and the calculation result after the change at the reception point.

(3) Calculate diffracted wave

(4) Use ray tracing method

(5) Calculate power at target reception point by using another calculable reception point as a pseudo transmission point

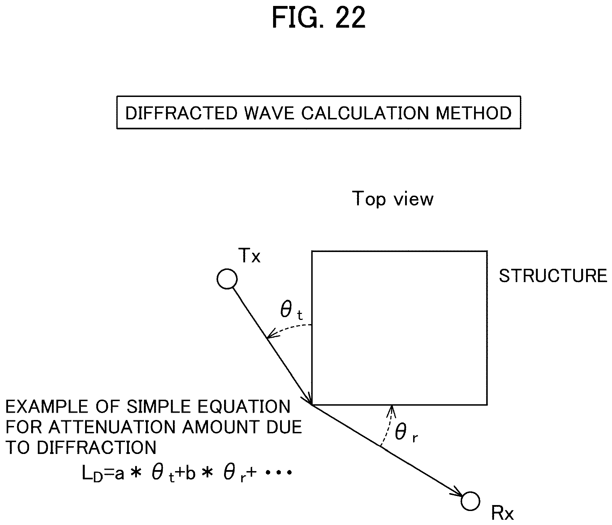

Fig. 22 illustrates an example of a method of calculating a diffracted wave. In the first place, because the power of the diffracted wave is weak, a simple calculation method may be applied. As illustrated in Fig. 22, the attenuation amount may be obtained by performing projection onto a perpendicular surface of an edge of a structure and substituting into a simple relational expression that defines a radiowave irradiation angle ($\theta t$) and diffraction angle ($\theta r$).

(Configuration example of radiowave propagation estimation device)

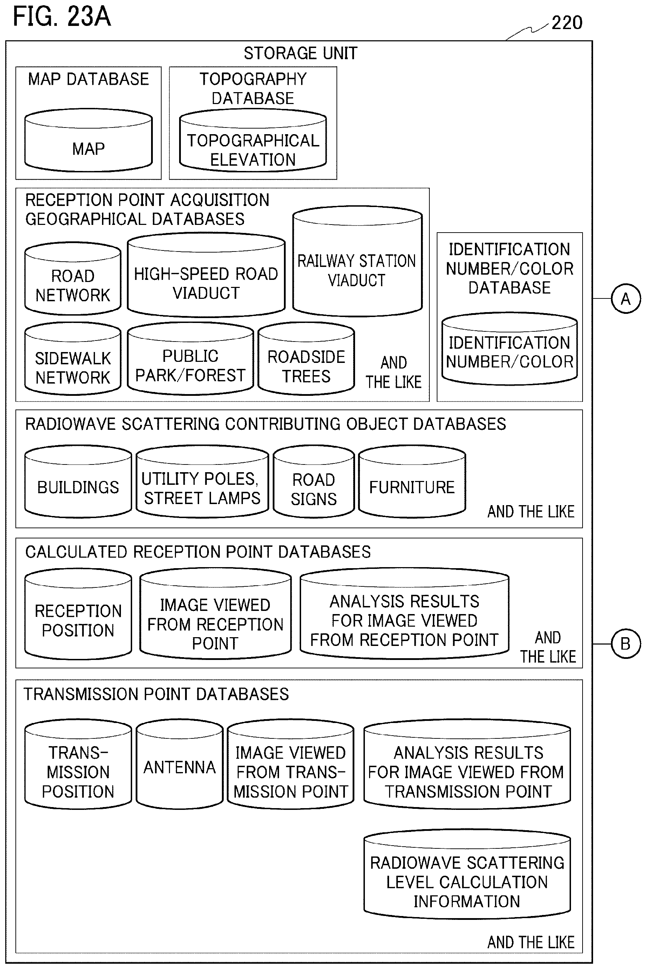

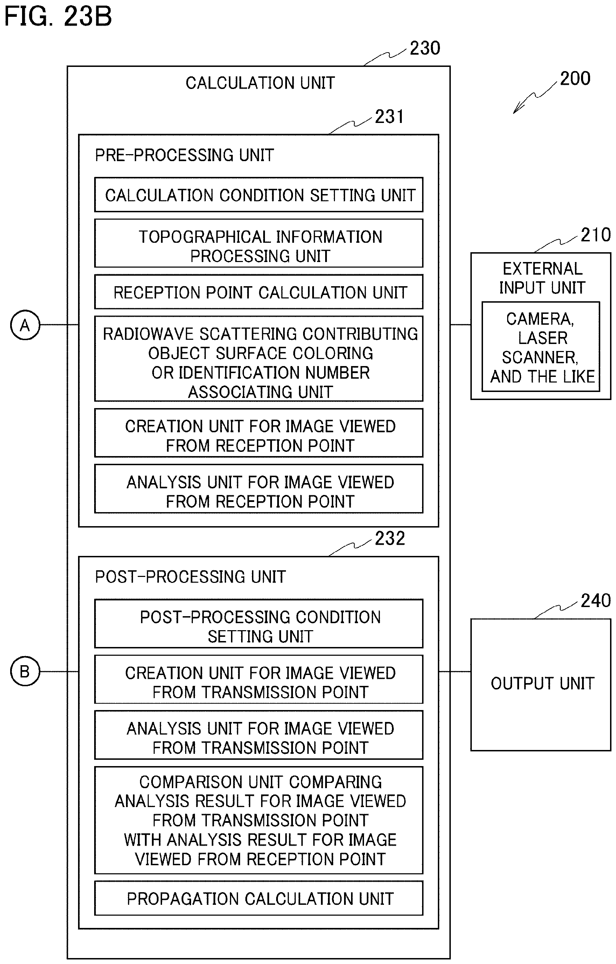

Figs. 23A and 23B illustrate a configuration example of a radiowave propagation estimation device according to the present embodiment. As illustrated in Figs. 23A and 23B, the radiowave propagation estimation device 200 includes an external input unit 210, a storage unit 220, a calculation unit 230, and an output unit 240.

The external input unit 210 is capable of externally inputting information not stored (held) in the storage unit 220 to the storage unit 220 or the like. For example, the external input unit 210 is capable of inputting image data acquired by a camera or a laser scanner to the storage unit 220 or the like.

The storage unit 220 is capable of storing various databases (DB) for map data and the like. For example, the storage unit 220 is capable of storing a geographical information DB, a radiowave scattering contributing object DB, an identification number/color DB, a reception point DB, a transmission point DB, and the like.

The calculation unit 230 includes a pre-processing unit 231 and a post-processing unit 232. The pre-processing unit 231 is capable of setting the reception point in a designated range and of creating and analyzing reception-point images in advance. Specifically, the pre-processing unit 231 may have the following functions.

(1) Designate conditions for interval between evaluation area and reception point, and for usage DB and so forth.
(2) Calculate reception point on the basis of interval between evaluation area and reception point by using reception point acquisition DB, for example, road network
(3) Color or associate an identification number with a surface of the radiowave scattering contributing object
(4) Create image viewed from reception point
(5) Analyze image viewed from reception point
(6) Store image viewed from reception point and analysis result, in DB

In the present embodiment, the pre-processing unit 231 may function as part of the extraction unit. Specifically, as described above, the pre-processing unit 231 is capable of using identification information enabling an object including a structure to be identified, and map data including the structure, to extract the structure of an object visible from a direct or pseudo reception point of the radiowaves, on the basis of the identification information.

The structure of the object may be the external shape of the structure or the like, and may particularly include a surface configuration of a building or the like configured by a plurality of surfaces (a flat surface may be used, but a curved surface may be used).

As described above, the pre-processing unit 231 (the extraction unit) is capable of extracting the structure (surface) of an object on the basis of a color (or number) identifying the surface of the object. Furthermore, the surface of the object may be divided into a plurality of regions (meshes) as illustrated in Fig. 19. Different identification information (numbers or colors) may be assigned to each of the regions (meshes).

Furthermore, broadly speaking, the structure of an object may include the ground around the structure. Ground is interchangeable with the term ground surface. The ground surface may also be interpreted as a region where no structures such as buildings are installed.

The post-processing unit 232 is capable of setting the transmission point, and creating and analyzing an image viewed from the transmission point. Furthermore, the post-processing unit 232 is capable of performing comparison and integration with the analysis result of the reception point image and is capable of calculating and combining the radiowave scattering levels at each surface of the structure. Specifically, the post-processing unit 232 may have the following functions.

(1) Set post-processing conditions (scatter frequency setting, various transmission-point settings, antenna pattern, and the like)
(2) Create image as viewed from transmission point
(3) Analyze image as viewed from transmission point
(4) Compare and integrate the analysis result of the image viewed from the transmission point with the analysis result of the image viewed from the reception point (count the number of pixels of a common surface viewed from the transmission point and the reception point, and so forth)
(5) Calculate and combine radiowave scattering levels of each surface of structure

In the present embodiment, the functions (1) to (4) of the post-processing unit 232 may function as parts of the extraction unit. Specifically, as described above, the functions (1) to (4) of the post-processing unit 232 use identification information enabling an object including a structure to be identified, and map data including the structure, to enable extraction of the structure of an object viewed from a direct or pseudo transmission point of the radiowaves, on the basis of identification information. Therefore, the functions (1) to (4) of the post-processing unit 232, and the pre-processing unit 231 may function as an extraction unit. The propagation calculation unit of the post-processing unit 232 may function as an estimation unit. Specifically, the propagation calculation unit is capable of estimating the radiowave propagation characteristic by using information indicating characteristics of the structure of the object, such as the structure extracted by the functions (1) to (4) (extraction unit) of the pre-processing unit 231 and the post-processing unit 232. The characteristics of the structure may include the type of object, the external configuration of a surface (number, size, direction, position (distance), surface area of the visible portion, and the like), the material of the surface, and so forth.

As described above, the propagation calculation unit (estimation unit) may estimate the propagation characteristic by using the number of pixels (corresponding to the surface area of the visible portion) constituting the surface of the object visible from both the transmission point and the reception point. Specifically, as illustrated in Figs. 16 and 17, the propagation calculation unit may calculate the reception strength from the number of pixels of an image of a surface which is commonly visible from the transmission point and the reception point, and estimate the propagation characteristic.

The propagation calculation unit may change the height of the transmission point in a case where an object visible from both the transmission point and the reception point is not found. Increasing the height is typically effective in changing the height, but the height may also be reduced.

As described above, the propagation calculation unit may estimate the propagation characteristic before the height is changed on the basis of the difference between the calculation results of the reception characteristic at all the other reception points before and after the height is changed. Specifically, the propagation calculation may change (increase) the height of the transmission point so that the target reception point is calculable, obtain a statistic for the difference in the calculation result at another calculable reception point both before and after the change, that is, the so-called average value and the standard deviation value, and calculate (estimate) the reception strength before the change by using the average value and the standard deviation value, and the calculation result after the change at the reception point.

Furthermore, in a case where an object visible from both the transmission point and the reception point is not found, the propagation calculation unit may estimate the propagation characteristic by performing any of: setting a default value for reception strength at the reception point, calculating a diffracted wave of the radiowave, and using a ray tracing method as described above. Alternatively, in a case where an object visible from both the transmission point and the reception point is not found, the propagation calculation unit may use another calculable reception point as a pseudo transmission point to estimate the propagation characteristic at the reception point to be estimated.

The propagation calculation unit may estimate at least one of reception power at the reception point, propagation loss between the transmission point and the reception point, and channel characteristics between the transmission point and the reception point. The channel characteristics may include the power, delay time, angle of arrival, and the like, of each ray. A specific estimation method will be described below.

The propagation calculation unit may acquire, from the outside, information on an object contributing to radiowave scattering (radiowave scattering contributing object). Specifically, the propagation calculation unit may acquire information on the radiowave scattering contributing object via the external input unit 210. The propagation calculation unit may estimate the aforementioned propagation characteristic by further using the acquired information.

The objects include structures, and may further include a reflector capable of dynamically controlling reflected waves. Such a reflector may be called a Reconfigurable Intelligent Surface (RIS) or the like. The propagation calculation unit may control the characteristics of the reflector to estimate the aforementioned propagation characteristic.

The output unit 240 is capable of displaying a color map of a calculation result (reception level) by the calculation unit 230 on a map or of outputting the calculation result to a file. Furthermore, the output unit 240 is also capable of displaying or outputting the image data illustrated in Figs. 16 and 21, and so forth.

(Operation example)

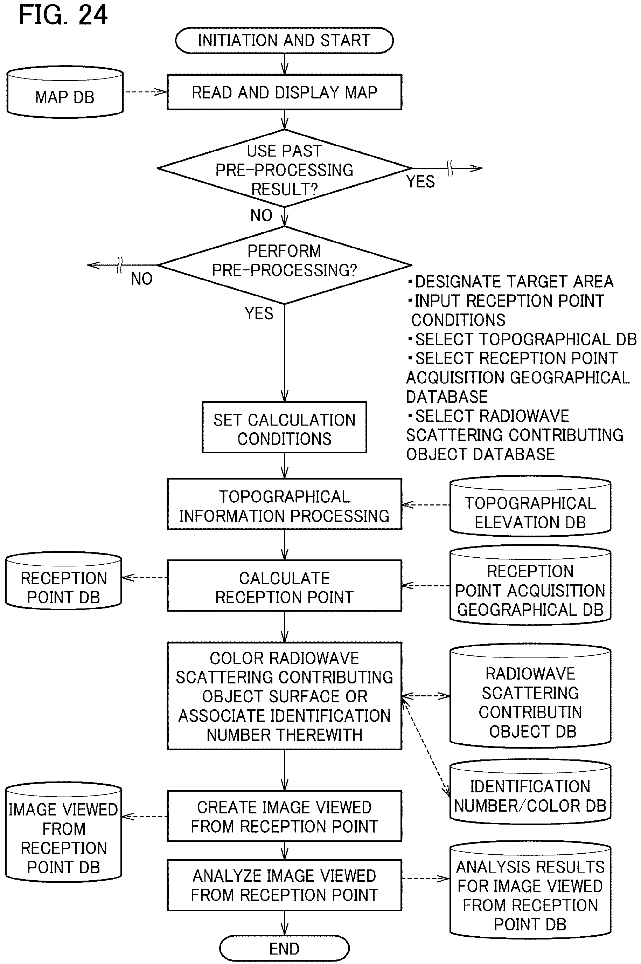

Next, an operation example of the radiowave propagation estimation device 200 according to the present embodiment will be described. Fig. 24 illustrates an operation flow of the pre-processing unit 231 of the calculation unit 230. As illustrated in Fig. 24, the pre-processing unit 231 executes setting of a calculation condition, topographical information processing, calculation of the reception point, association of colors or identification numbers, and creation and analysis of an image viewed from the reception point.

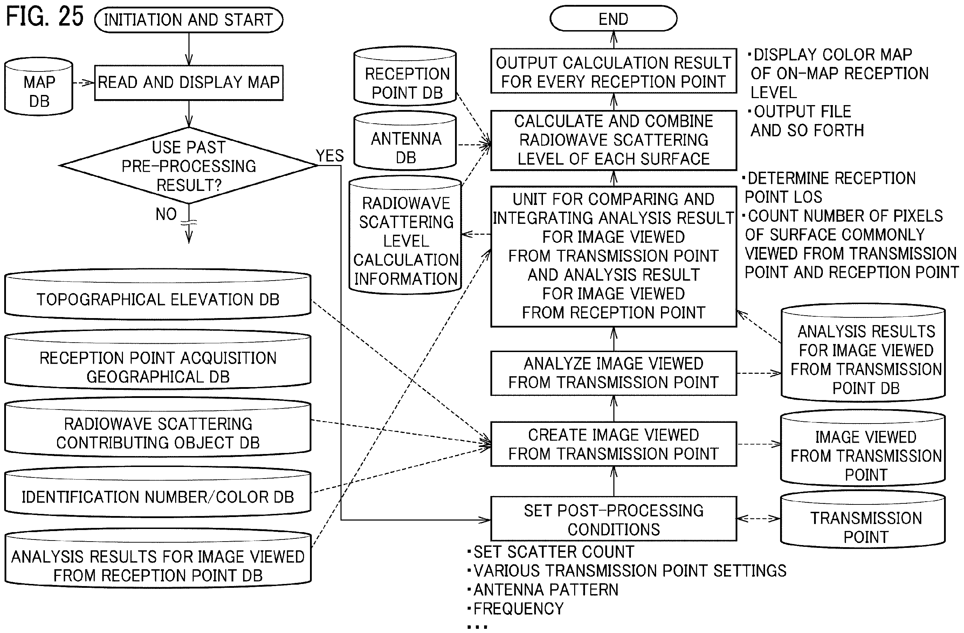

Fig. 25 illustrates an operation flow of the post-processing unit 232 in a case where a past pre-processing result is used. As illustrated in Fig. 25, while using past pre-processing results, the post-processing unit 232 sets post-processing conditions, creates an image viewed from the transmission point, analyzes the image viewed from the transmission point, compares and integrates an analysis result of the image viewed from the transmission point with an analysis result of the image viewed from the reception point, calculates and combines radiowave scattering levels on each surface of the structure, and uses the output unit 240 to output a calculation result for each reception point.

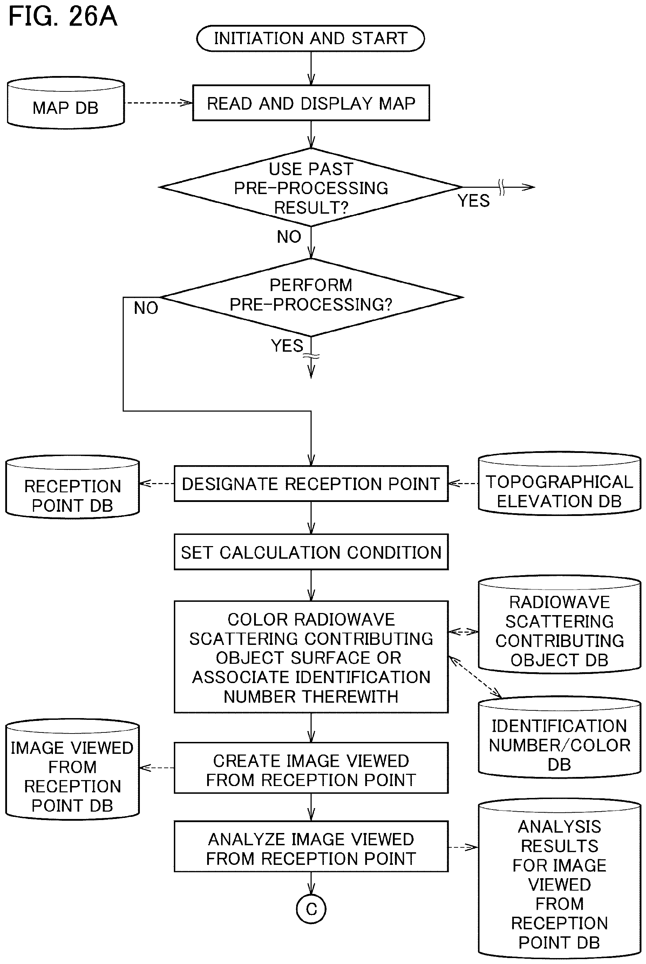

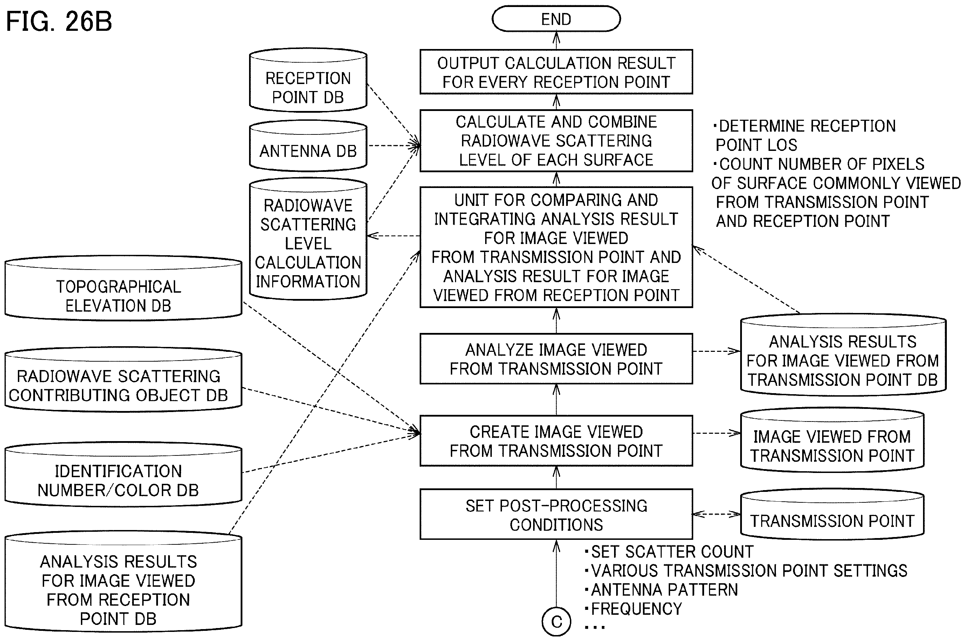

Figs. 26A and 26B illustrate an operation flow of the pre-processing unit 231 and the post-processing unit 232 in the case where calculation is performed directly from the beginning. As illustrated in Figs. 26A and 26B, the pre-processing unit 231 may perform an operation substantially similar to the operation illustrated in Fig. 24, and the post-processing unit 232 may perform an operation substantially similar to the operation illustrated in Fig. 25.

(Acquirable propagation characteristic)

Next, an example of a propagation characteristic that can be acquired by the radiowave propagation estimation device 200 according to the present embodiment will be described.

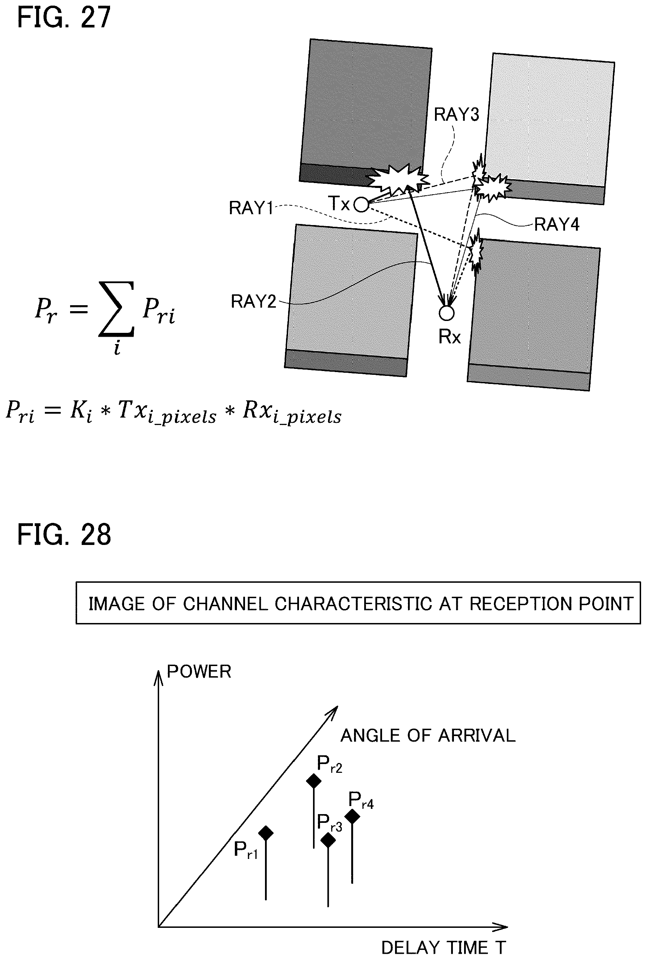

Fig. 27 illustrates an example in which reception power and propagation loss are calculated by a radiowave propagation estimation device 200. As illustrated in Fig. 27, assuming that the reception power of scattering at each surface i is Pri, the total Pr of the reception power at the reception points can be expressed by the equation illustrated in Fig. 27.

Fig. 28 illustrates a channel characteristic calculation example by the radiowave propagation estimation device 200. As described above, the channel characteristics may include the power, delay time, angle of arrival, and the like, of each ray.

Because the ray i (path) at each surface i has the following information, the channel characteristic at the reception point can be calculated.

·Reception power Pri
·Emission direction θti, angle of arrival θri, delay time Ti

In addition, the radiowave propagation estimation device 200 includes the external input unit 210 and is capable of utilizing the external input as described above. The purpose of the external input is to capture an object (for example, a vehicle, a telephone box, a human body, or the like) that does not exist in the radiowave scattering contributing object DB and use the object to calculate the propagation characteristic.

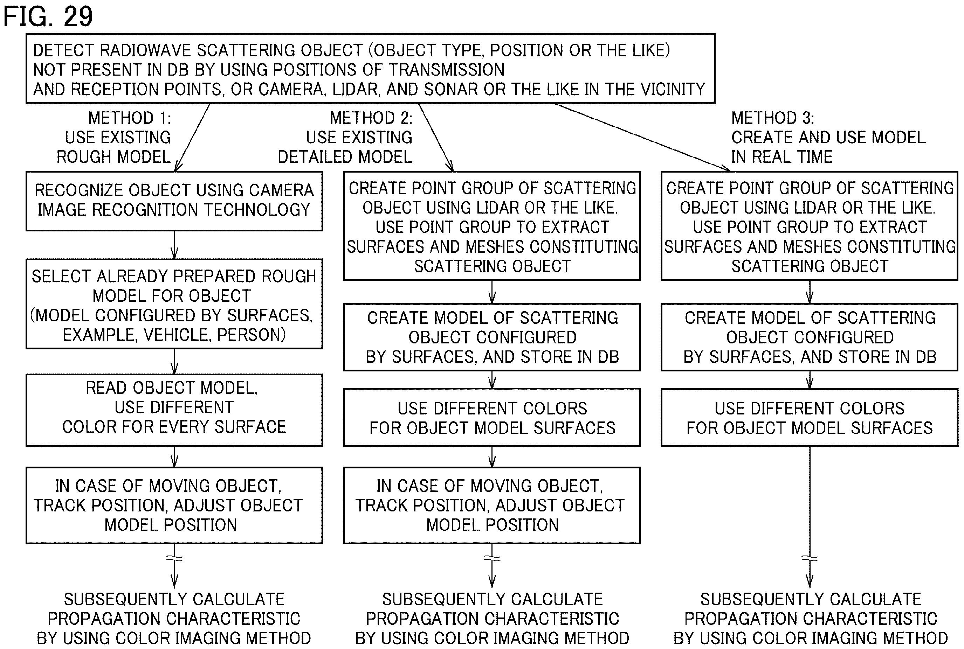

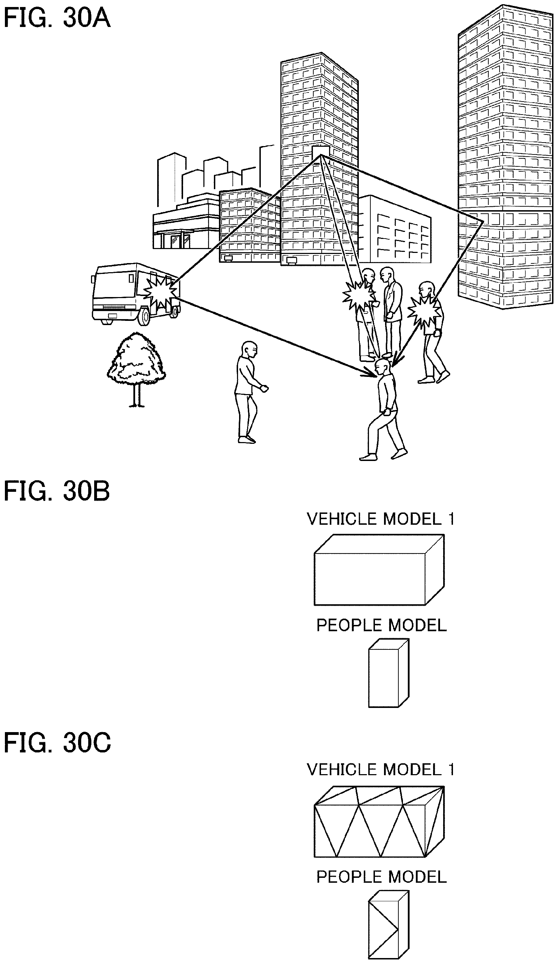

Fig. 29 illustrates an operation flow in which the radiowave propagation estimation device 200 captures an object not present in the radiowave scattering contributing object DB. Figs. 30A to 30C illustrate examples of objects not present in the radiowave scattering contributing object DB and examples of vehicle and human body models.

As illustrated in Fig. 29, in a case where an object not present in the radiowave scattering contributing object DB is captured, the radiowave propagation estimation device 200 may use a rough model (see Fig. 30B) as illustrated by Methods 1 to 3 or may use a detailed model (see Fig. 30C) as per Methods 2 and 3.

The radiowave propagation estimation device 200 is capable of using such a model to create a model for radiowave scattering contributing objects and of storing the model in the radiowave scattering contributing object DB. As a result, the surrounding environment can be reproduced realistically, the estimation accuracy can be improved, and the influence on the channel characteristics due to changes in the surrounding environment caused by the moving object can also be evaluated.

(Modified example)

The radiowave propagation estimation device 200 may also be used in combination with a reconfigurable intelligent surface (RIS) or the like.

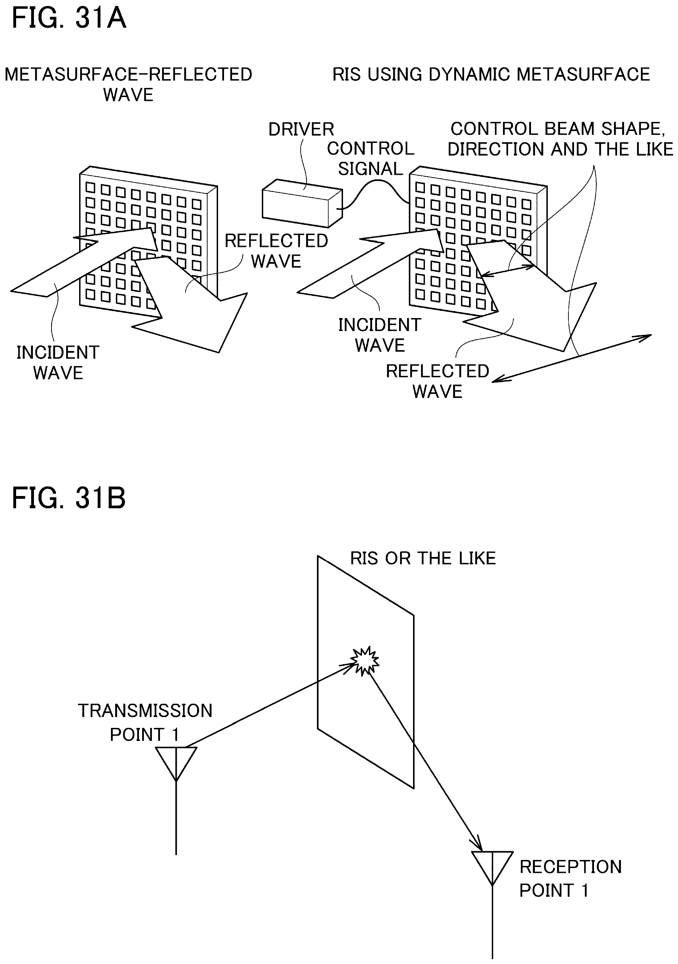

Figs. 31A and 31B illustrate control imaging of a propagation characteristic at a reception point by an RIS or the like. In a case where an RIS is to be combined, the radiowave propagation estimation device 200 may operate as follows.

(1) Assign identification number or color to RIS or the like
(2) Generate and analyze image from transmission point and reception point, and count number of pixels visible from both of them
(3) Calculate received radiowave strength (Pr = k * Tx_pixels * Rx_pixels)
(4) Adjust and control incident angle and reflection angle of RIS or the like so as to maximize reception power

(Actions and effects)

With the radiowave propagation estimation device 200 according to the present embodiment, the following actions and effects can be obtained. Specifically, the radiowave propagation estimation device 200 uses identification information (a color or number) enabling an object including a structure to be identified, and map data including the structure, to extract a structure (external surface or the like) of the object which is visible from both a direct or pseudo transmission point of radiowaves and a direct or pseudo reception point of the radiowaves, on the basis of the identification information. Further, the radiowave propagation estimation device 200 estimates the propagation characteristic of the radiowaves by using information indicating the characteristic of the extracted structure.

Therefore, even in a case where the normal reflection point Ir does not belong to a surface of a building, it is possible to effectively reduce errors and computational complexity in calculating the power of radiowaves arriving at a reception point. Further, because radiowaves are scattered not only in the normal direction but also in various directions, with the radiowave propagation estimation device 200, it is possible to effectively reduce errors and computational complexity in calculating the power of the radiowaves arriving at the reception point.

In the present embodiment, the radiowave propagation estimation device 200 is capable of extracting the aforementioned structures on the basis of a color identifying the surface of an object, and is capable of estimating the propagation characteristic by using the number of pixels constituting the surface of the object visible from both the transmission point and the reception point. Therefore, the propagation characteristic can be estimated with a higher accuracy level while suppressing the processing load.

In the present embodiment, the surface of the object may be divided into a plurality of regions (meshes), and different identification information may be assigned to each of the regions. As a result, surfaces visible from both the transmission point and the reception point can be determined more accurately, and hence the propagation characteristic can be estimated with a higher accuracy level.

In the present embodiment, an object may include the ground around the structure. As a result, if only one image viewed from the transmission point is analyzed, the line-of-sight state of the reception point in the whole evaluation target area can be determined, and the propagation characteristic can be efficiently estimated.

In the present embodiment, the radiowave propagation estimation device 200 is capable of estimating at least one of reception power at the reception point, propagation loss between the transmission point and the reception point, and a channel characteristic between the transmission point and the reception point. Therefore, the required propagation characteristic can be easily provided.

In the present embodiment, the radiowave propagation estimation device 200 is capable of acquiring, from the outside, information on the radiowave scattering contributing object and is capable of using the information to estimate the propagation characteristic. As a result, even in a case where an object that is not present in the radiowave scattering contributing object DB is included, the propagation characteristic can be estimated with a higher accuracy level.

In the present embodiment, objects may include a reflector (such as an RIS) capable of dynamically controlling reflected waves, and the radiowave propagation estimation device 200 is capable of controlling the characteristics of the reflector and is capable of estimating the propagation characteristics. Therefore, it is also possible to perform control of the propagation characteristic at the reception point with a higher accuracy level by combining an RIS.

[Other Embodiments]

Although the content of the present invention has been described above with reference to embodiment examples, the present invention is not limited to such descriptions, and it is obvious to those skilled in the art that various modifications and improvements can be made.

The functional blocks (constituent elements) of the radiowave propagation estimation device 100 illustrated in Fig. 1 and the radiowave propagation estimation device 200 illustrated in Figs. 23A and 23B may be realized by an arbitrary combination of hardware and/or software. The means for realizing each functional block is not limited to a specific means. For example, each functional block may be realized by one device obtained through physical and/or logical coupling, or may be realized by connecting a plurality of physically and/or logically separated devices directly and/or indirectly (for example, as wired and/or wireless).

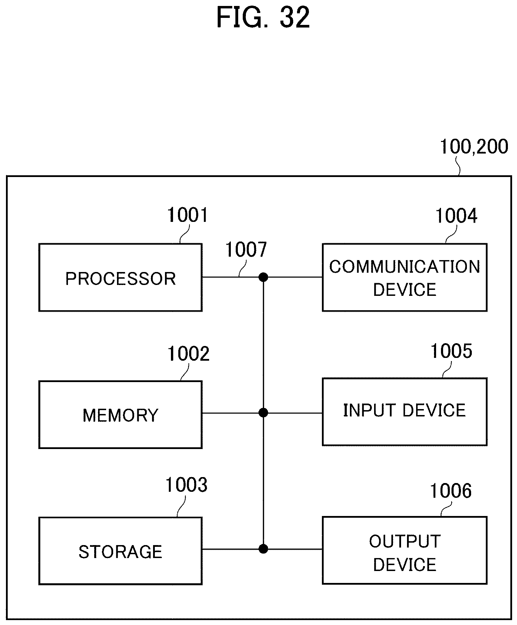

Fig. 32 illustrates a hardware configuration example of the radiowave propagation estimation device 100 and the radiowave propagation estimation device 200. The radiowave propagation estimation device 100 may be configured by, for example, a computer such as a personal computer (PC) or a server computer. The computer is an example of an information processing device.

The radiowave propagation estimation device 100 (and the radiowave propagation estimation device 200, hereinafter the same) may include one computer or may include a plurality of computers. The load distribution of the processing executed by the radiowave propagation estimation device 100 may be achieved by a plurality of computers.

As illustrated in Fig. 16, the radiowave propagation estimation device 100 may, for example, include a processor 1001, a memory 1002, storage 1003, a communication device 1004, an input device 1005, an output device 1006, and a bus 1007.

Note that, in the following description, the term "device" is interchangeable with circuit, device, unit, or the like. The hardware configuration of the radiowave propagation estimation device 100 may be configured to include one or more of each device illustrated in Fig. 10 or may be configured by excluding some of the devices.

For example, although only one processor 1001 is illustrated in Fig. 32, a plurality of processors may be included in the radiowave propagation estimation device 100. In addition, the processing in the radiowave propagation estimation device 100 may be executed by one processor 1001 or may be executed by a plurality of processors. In one or more processors, a plurality of processes may be executed simultaneously, in parallel, sequentially, or by other methods. Note that the processor 1001 may be a single-core processor or a multi-core processor. The processor 1001 may be implemented using one or more chips.

For example, one or more functions included in the radiowave propagation estimation device 100 is/are realized by causing hardware such as the processor 1001 and the memory 1002 to read predetermined software. Note that the "software" may be referred to as a "program", an "application", or a "software module".

For example, the processor 1001 reads and executes a program by controlling one or both of reading and writing of data stored in one or both of the memory 1002 and the storage 1003. Note that the program may be transmitted from the network through communication by the communication device 1004 via an electric communication line.

The program may be a program that causes a computer to execute all or some of the processing of the radiowave propagation estimation device 100. One or more functions of the radiowave propagation estimation device 100 are realized in accordance with execution of program code included in the program. All or part of the program code may be stored in the memory 1002 or the storage 1003, or may be described as part of an operating system (OS) .

For example, the program may include program code that embodies the functional blocks illustrated in Fig. 1 and the like, and may include program code that executes the illustrated flow. A program including such program code may be referred to as a "radiowave propagation estimation program".

The processor 1001 is an example of a processing unit, and controls the entire computer by operating the OS, for example. The processor 1001 may be configured using a central processing unit (CPU) that includes an interface with a peripheral device, and a control device, an arithmetic unit, a register, and the like.

In addition, for example, the processor 1001 reads one or both of the program and the data from one or both of the storage 1003 and the communication device 1004 into the memory 1002, and executes various processing according to the program and/or data thus read.

The memory 1002 is an example of a computer-readable recording medium, and may be configured using, for example, at least one of ROM, EPROM, EEPROM, RAM, SSD, and the like. Note that "ROM" is an abbreviation for "Read Only Memory", and "EPROM" is an abbreviation for "Erasable Programmable ROM". "EEPROM" is an abbreviation for "Electrically Erasable Programmable ROM," "RAM" is an abbreviation for "Random Access Memory," and "SSD" is an abbreviation for "Solid State Drive."

The memory 1002 may be referred to as a register, a cache, a main memory, a working memory, a main storage device, or the like. The memory 1002 stores a program that can be executed to implement the radiowave propagation estimation method according to an embodiment of the present invention.

The storage 1003 is an example of a computer-readable recording medium, and may be configured using at least one of an optical disk such as a CD-ROM (Compact Disc ROM), a hard disk drive (HDD), a flexible disk, a magneto-optical disk (for example, a compact disc, a digital versatile disc, or a Blu-ray (registered trademark) disk), a smart card, a flash memory (for example, a card, a stick, or a key drive), a flexible disk, a magnetic strip, and the like. The storage 1003 may also be referred to as an auxiliary storage device. The aforementioned storage medium may be, for example, a database including one or both of the memory 1002 and the storage 1003, a server, or other appropriate media.

The communication device 1004 is an example of hardware (which may be referred to as a "transceiver device") for performing communication between computers via one or both of a wired network and a wireless network. The "communication device" may be referred to as, for example, a network device, a network controller, a network card, a communication module, or the like.

The input device 1005 is an example of an input device that receives an input from the outside of the radiowave propagation estimation device 100. By way of an example, one or more of a keyboard, a mouse, a microphone, a switch, a button, and a sensor may be included in the input device 1005.

The output device 1006 is an example of an output device (output unit 108) that makes outputs to the outside of the radiowave propagation estimation device 100. For example, one or more of a display, a loudspeaker, an LED lamp, and the like may be included in the output device 1006. Note that "LED" is an abbreviation for "light emitting diode".

Note that the input device 1005 and the output device 1006 may have individual configurations, or may have an integrated configuration such as a touch panel, for example.

In addition, the respective devices such as the processor 1001 and the memory 1002 may be communicably connected by a bus 1007. The devices may be connected by using a single bus 1007 or may be connected by using a plurality of buses.

The radiowave propagation estimation device 100 may include hardware such as a microprocessor, a DSP, an ASIC, a PLD, or an FPGA. For example, the processor 1001 may be implemented using at least one of these pieces of hardware. Some or all of the functional blocks illustrated in Figs. 1 and 2 may be realized by the hardware.

Note that "DSP" is an abbreviation for "Digital Signal Processor", and "ASIC" is an abbreviation for "Application Specific Integrated Circuit". "PLD" is an abbreviation for "Programmable Logic Device", and "FPGA" is an abbreviation for "Field Programmable Gate Array".

(Adaptation system)

The embodiments described in this specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), other appropriate systems, and/or a next-generation system expanded on the basis of such systems.

(Processing procedure, and the like)

The order of the processing procedure, sequence, flowchart, and the like of each aspect/embodiment described in the present specification may be changed as long as there is no contradiction. For example, for the methods described in the present specification, elements of various steps are presented in an illustrative order and are not limited to the presented particular order.

(Handling of inputted/outputted information and the like)

The inputted/outputted information and the like may be stored in a specific location (for example, memory) or may be managed in a management table. The inputted/outputted information and the like can be overwritten, updated, or added. The outputted information and the like may be deleted. The inputted information and the like may be transmitted to another device.

(Determination method)

The determination may be made using values represented by one bit (0 or 1), may be made using truth-value (Boolean: true or false), or may be made through a comparison of numerical values (for example, a comparison with a predetermined value).

(Software)

Regardless of being referred to as software, firmware, middleware, microcode, hardware description language, or some other name, software is broadly construed to mean an instruction, an instruction set, a code, a code segment, program code, a program, a subprogram, a software module, an application, a software application, a software package, a routine, a subroutine, an object, an executable file, an execution thread, a procedure, a function, or the like.

In addition, software, instructions, and the like may be transmitted and received via a transmission medium. For example, in a case where software is transmitted from a website, a server, or another remote source by using a wired technology such as a coaxial cable, an optical fiber cable, a twisted pair, or a digital subscriber line (DSL) and/or a wireless technology such as infrared, radio, and microwave technology, these wired and/or wireless technologies are included in the definition of the transmission medium.

(Information, signals)

The information, signals, and the like described in the present specification may be represented using any of a variety of different techniques. For example, data, instructions, commands, information, signals, bits, symbols, chips, and the like may be represented by voltages, currents, electromagnetic waves, magnetic fields or magnetic particles, optical fields or photons, or any combination thereof.

Note that the terms described in the present specification and/or terms serving to facilitate understanding of the present specification may be replaced with terms having the same or similar meanings.

(Parameters)

Furthermore, the information, parameters, and the like described in the present specification may be represented by absolute values, may be represented by relative values relative to a predetermined value, or may be represented by other corresponding information.

The names used for the parameters described above are not limited in any respect. Moreover, expressions and the like using these parameters may be different from those explicitly disclosed in the present specification.

(Base station)

A base station may accommodate one or more (for example, three) cells (also referred to as sectors). In a case where the base station accommodates a plurality of cells, the whole coverage area of the base station may be divided into a plurality of smaller areas, and each smaller area may also provide a communication service by means of a base station subsystem (for example, a small base station RRH for indoor use: Remote Radio Head). The term "cell" or "sector" refers to part or all of a coverage area of a base station and/or a base station subsystem that provides communication services in this coverage. Further, the terms "base station," "BS," "eNB," "gNB," "cell," and "sector" may be used interchangeably in the present specification. The base station may also be referred to as a fixed station, a NodeB, an eNodeB (eNB), a gNodeB, an access point, a small cell, or the like. A small cell is an example of a cell having a smaller coverage than a macro cell. A small cell may be referred to differently depending on the coverage area. For example, a small cell may be referred to as a "femtocell", a "picocell", a "microcell", a "nanocell", a "metro cell", a "home cell", or the like. The term "cell" or "sector" means an individual geographical range in which the base station provides a wireless service, and may also mean part of a communication function managed by the base station to perform communication with a terminal in the individual geographical range.

(UE)

A UE may also be referred to by those skilled in the art as a user terminal, a terminal, a mobile station, a subscriber station, a mobile unit, a subscriber unit, a wireless unit, a remote unit, a mobile device, a wireless device, a radio communications device, a remote device, a mobile subscriber station, an access terminal, a mobile terminal, a wireless terminal, a remote terminal, a handset, a user agent, a mobile client, a client, UE, or some other suitable terminology. The UE may be a fixed terminal whose location does not change, or may be a mobile terminal whose location changes. As a non-limiting example, the UE may be a mobile terminal, such as a mobile phone, a smartphone, a tablet terminal, or the like. Furthermore, the UE may be an Internet of Things (IoT) terminal. According to IoT, a communication function can be installed in various "objects". Various "objects" equipped with a communication function can be connected to the Internet, a radio access network, or the like, to perform communication. For example, an IoT terminal may include a sensor device or a meter (measuring instrument), or the like, that is equipped with a radio communication function. Any monitoring device such as a monitoring camera or a fire alarm equipped with a sensor device or a meter may denote a terminal. Radio communication between a UE that is an IoT terminal such as a monitoring device and a base station may be referred to as MTC (Machine Type Communications). Therefore, a UE that is an IoT terminal may be referred to as an "MTC device".

The functions include, but are not limited to, determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. For example, a functional block (configuration unit) that causes transmission to function is referred to as a transmitting unit or a transmitter. In any case, as described above, the implementation method is not particularly limited.

The specific operation performed by the base station in the present disclosure may be performed by an upper node thereof in some cases. It is clear that, in a network of one or more network nodes having a base station, various operations performed for communication with a terminal may be performed by at least one of the base station and another network node (for example, an MME or S-GW is conceivable, but not limited thereto) other than the base station. Although a case where there is one network node other than the base station has been illustrated above, a combination of a plurality of other network nodes (for example, an MME and an S-GW) may be used.

Information and signals (information and the like) can be outputted from an upper layer (or lower layer) to a lower layer (or upper layer). Inputs and outputs may be made via a plurality of network nodes.

Each aspect/embodiment described in the present disclosure may be used alone, or may be used in combination, or may be switched along with the execution. Furthermore, notification of predetermined information (for example, notification of "being X") is not limited to being performed explicitly, and may be performed implicitly (for example, no notification of the predetermined information is made).

The terms "system" and "network" used in the present disclosure are used interchangeably.

The terms "connected", "coupled", or any variation thereof, mean any direct or indirect connection or coupling between two or more elements, and may include the presence of one or more intermediate elements between two elements that are "connected" or "coupled" to each other. The coupling or connection between the elements may be physical, logical, or a combination thereof. For example, "connection" is interchangeable with "access". When used in this disclosure, two elements can be considered to be "connected" or "coupled" to each other by using at least one of one or more wires, cables, printed electrical connections, and as some non-limiting and non-exhaustive examples, by using electromagnetic energy having wavelengths in the radio frequency domain, the microwave region, and the light (both visible and invisible) region, and the like.

The reference signal may be abbreviated as RS, or may be referred to as a pilot according to the standard applied.

The phrase "on the basis of" as used in the present disclosure does not mean "on the basis of only" unless explicitly stated otherwise. In other words, the description "on the basis of" means both "on the basis of only" and "on the basis of at least."

Any reference to elements using designations such as "first," "second," and the like as used in the present disclosure does not generally limit the amount or order of those elements. These designations may be used in the present disclosure as a convenient way to distinguish between two or more elements. Thus, references to first and second elements do not imply that only two elements may be employed therein or that the first element must precede the second element in some way.

In the present disclosure, the used terms "include," "including," and variations thereof are intended to be inclusive in a manner similar to the term "comprising". Furthermore, the term "or" as used in the present disclosure is not intended to be an exclusive-OR.

In the present disclosure, for example, in a case where articles such as a, an, and the in English are added by translation, the present disclosure may include cases where a noun following these articles take the plural form.

The term "determining" as used in the present disclosure may encompass a wide variety of actions. "determining" may include deeming that determining has been performed by, for example, judging, calculating, computing, processing, deriving, investigating, searching (looking up, search, inquiry) (for example, searching in a table, a database, or another data structure), ascertaining, and the like. Furthermore, "determining" may include deeming that determining has been performed by, for example, receiving (for example, receiving information), transmitting (for example, transmitting information), inputting, outputting, and accessing (for example, accessing data in memory), and the like. In addition, "determining" may include deeming that determining has been performed by, for example, resolving, selecting, choosing, establishing, comparing, and the like. That is, "determining" may include deeming that "determining" regarding some action has been performed. Further, "determining" is interchangeable with "assuming", "expecting", "considering", or the like.

In the present disclosure, the language "A and B are different" may mean "A and B are different from each other". Note that this language may mean that "A and B are each different from C". Terms such as "apart", "coupled" and the like may also be interpreted similarly as "different".

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for illustrative purposes and does not have any restrictive meaning with respect to the present disclosure.

Reference Signs List

100 Radiowave propagation estimation device
102 Control unit
102a Setting unit
102b Surface edge identification unit
102c Transmission point view search unit
102d Reception point view search unit
102e Propagation calculation information extraction unit
102f Propagation calculation unit
106 Storage unit
108 Output unit
200 Radiowave propagation estimation device
210 External input unit
220 Storage unit
230 Calculation unit
231 Pre-processing unit
232 Post-processing unit
240 Output unit
1001 Processor
1002 Memory
1003 Storage
1004 Communication device
1005 Input device
1006 Output device
1007 Bus

**Claims**

1. A radiowave propagation estimation device comprising:

an extraction unit that extracts, by using identification information enabling an object including a structure to be identified and map data including the object, the structure of the object which is visible from both a direct or pseudo transmission point of radiowaves and a direct or pseudo reception point of the radiowaves, on the basis of the identification information; and

an estimation unit that estimates a propagation characteristic of the radiowaves by using information indicating a characteristic of the structure of the object extracted by the extraction unit.

2. The radiowave propagation estimation device according to claim 1, wherein

the extraction unit extracts the structure on the basis of a color or an identification number identifying a surface of the object, and

the estimation unit estimates the propagation characteristic by using the number of pixels constituting the surface of the object which is visible from both the transmission point and the reception point.

3. The radiowave propagation estimation device according to claim 1, wherein

the surface of the object is divided into a plurality of regions, and
different identification information is assigned to each of the regions.

4. The radiowave propagation estimation device according to claim 1, wherein
the object includes ground around the structure.

5. The radiowave propagation estimation device according to claim 1, wherein
the estimation unit:

changes, in a case where the object which is visible from both the transmission point and the reception point is not found, a height of the transmission point, and

estimates the propagation characteristic before the height is changed, on the basis of a difference in the propagation characteristic at another reception point that is calculable both before and after the height is changed, and the propagation characteristic at the reception point after the height is changed.

6. The radiowave propagation estimation device according to claim 1, wherein
the estimation unit, in a case where the object which is visible from both the transmission point and the reception point is not found, estimates the propagation characteristic by performing any of setting a default value for reception strength at the reception point, calculating a diffracted wave of the radiowave, and using a ray tracing method.

7. The radiowave propagation estimation device according to claim 1, wherein
the estimation unit, in a case where the object which is visible from both the transmission point and the reception point is not found, uses another calculable reception point as a pseudo transmission point and estimates the propagation characteristic at a target reception point.

8. The radiowave propagation estimation device according to claim 1, wherein
the estimation unit estimates at least any of reception power at the reception point, propagation loss between the transmission point and the reception point, and a channel characteristic between the transmission point and the reception point.

9. The radiowave propagation estimation device according to claim 1, wherein
the estimation unit:

acquires, from outside, information on the object contributing to scattering of the radiowaves, and
uses the information to estimate the propagation characteristic.

10. The radiowave propagation estimation device according to claim 1, wherein

the objects include a reflector capable of dynamically controlling a reflected wave, and
the estimation unit controls a characteristic of the reflector to estimate the propagation characteristic.

11. A radiowave propagation estimation method comprising the steps of:

using identification information enabling an object including a structure to be identified, and map data including the structure, to extract the structure of the object which is visible from both a direct or pseudo transmission point of radiowaves and a direct or pseudo reception point of the radiowaves, on the basis of the identification information; and

estimating a propagation characteristic of the radiowaves by using information indicating a characteristic of the extracted structure.

12. A radiowave propagation estimation device comprising:

an extraction unit that extracts two-dimensional data in three-dimensional map data which includes a reception point of radiowaves transmitted from a transmission point; and

an estimation unit that estimates a propagation characteristic of the radiowaves together with a diffraction calculation of the radiowaves in a surrounding environment, on the basis of the two-dimensional data extracted by the extraction unit.

13. A radiowave propagation estimation method comprising the steps of:

extracting two-dimensional data in three-dimensional map data which includes a reception point of radiowaves transmitted from a transmission point; and

estimating a propagation characteristic of the radiowaves together with a calculation of diffraction of the radiowaves in a surrounding environment, on the basis of the extracted two-dimensional data.

14. A radiowave propagation estimation device comprising:

an extraction unit that extracts, from the map data, a first parameter representing a potentially obstructive structure to radiowaves in a surrounding environment including a reception point, by applying a convolutional neural network to map data which includes the reception point of the radiowaves transmitted from a transmission point and includes at least one of identification information and distance information on a structure; and

an estimation unit that estimates a propagation characteristic of the radiowaves by applying a fully connected neural network to the first parameter extracted by the extraction unit and a second parameter representing a configuration of a radio communication system that performs radio communication between the transmission point and the reception point.

15. A radiowave propagation estimation method comprising the steps of:

extracting, from the map data, a first parameter representing a potentially obstructive structure to the radiowaves in a surrounding environment including the reception point, by applying a convolutional neural network to map data which includes the reception point of the radiowaves transmitted from a transmission point and includes at least one of identification information and distance information on a structure; and

estimating a propagation characteristic of the radiowaves by applying a fully connected neural network to the extracted first parameter and a second parameter representing a configuration of a radio communication system that performs radio communication between the transmission point and the reception point.

# FIG. 1

```
                                                                    100
┌─────────────────────────────────────────────────────────────────────────┐
│ PROPAGATION CHARACTERISTIC ESTIMATION DEVICE                              │
│         102                                  106                          │
│ ┌ ─ ─ ─ ─ ─ ─ ─ ─ ┐  ┌──────────────────────────────────┐               │
│ │  CONTROL UNIT    │  │        RECORDING UNIT            │       108      │
│ │                  │  │  (DATABASE MANAGEMENT UNIT)      │                │
│ │     102a         │  │                                  │  ┌──────────┐  │
│ │ ┌──────────────┐ │  │  ┌────────────────────────────┐  │  │          │  │
│ │ │ SETTING UNIT │ │  │  │  DATABASE OF TOPOGRAPHY    │  │  │ OUT-     │  │
│ │ └──────────────┘ │  │  │     AND STRUCTURE          │  │  │ PUT      │  │
│ │                  │  │  └────────────────────────────┘  │  │ UNIT     │  │
│ │     102b         │  │                                  │  │          │  │
│ │ ┌──────────────┐ │  │  ┌────────────────────────────┐  │  └──────────┘  │
│ │ │ SURFACE EDGE │ │  │  │   DATABASE OF SURFACE      │  │                │
│ │ │IDENTIFICATION│ │  │  │ AND EDGE OF TARGET STRUCTURE│  │               │
│ │ │    UNIT      │ │  │  └────────────────────────────┘  │                │
│ │ └──────────────┘ │  │                                  │                │
│ │     102c         │  │  ┌────────────────────────────┐  │                │
│ │ ┌──────────────┐ │  │  │   DATA OF IMAGE VIEWED      │  │                │
│ │ │TRANSMISSION  │ │  │  │ FROM TRANSMISSION POINT     │  │                │
│ │ │POINT VIEW    │ │  │  └────────────────────────────┘  │                │
│ │ │SEARCH UNIT   │ │  │                                  │                │
│ │ └──────────────┘ │  │  ┌────────────┐ ┌─────────────┐  │                │
│ │     102d         │  │  │ DATABASE   │ │  SCATTER    │  │                │
│ │ ┌──────────────┐ │  │  │ OF SURFACE │ │  WAVE       │  │                │
│ │ │RECEPTION     │ │  │  │ AND EDGE AS│ │ CALCULATION │  │                │
│ │ │POINT VIEW    │ │  │  │ VISIBLE    │ │ INFORMATION │  │                │
│ │ │SEARCH UNIT   │ │  │  │ FROM       │ │(SURFACE     │  │                │
│ │ └──────────────┘ │  │  │ TRANSMISSION│ │ AREA,      │  │                │
│ │     102e         │  │  │ POINT      │ │ IRRADIATION │  │                │
│ │ ┌──────────────┐ │  │  └────────────┘ │ ANGLE,      │  │                │
│ │ │ PROPAGATION  │ │  │  ┌────────────┐ │ SCATTER     │  │                │
│ │ │ CALCULATION  │ │  │  │DATA OF     │ │ ANGLE,      │  │                │
│ │ │ INFORMATION  │ │  │  │IMAGE       │ │ AND THE LIKE)│  │               │
│ │ │ EXTRACTION   │ │  │  │VIEWED FROM │ └─────────────┘  │                │
│ │ │ UNIT         │ │  │  │RECEPTION   │ ┌─────────────┐  │                │
│ │ └──────────────┘ │  │  │POINT       │ │ DIFFRACTION │  │                │
│ │     102f         │  │  └────────────┘ │ WAVE        │  │                │
│ │ ┌──────────────┐ │  │  ┌────────────┐ │ CALCULATION │  │                │
│ │ │ PROPAGATION  │ │  │  │DATABASE OF │ │ INFORMATION │  │                │
│ │ │ CALCULATION  │ │  │  │SURFACE AND │ │(EDGE        │  │                │
│ │ │ UNIT         │ │  │  │EDGE AS     │ │ SUBSTITUTE  │  │                │
│ │ └──────────────┘ │  │  │VISIBLE FROM│ │ POINT       │  │                │
│ │                  │  │  │RECEPTION   │ │ COORDINATES,│  │                │
│ │                  │  │  │POINT       │ │ IRRADIATION │  │                │
│ │                  │  │  └────────────┘ │ ANGLE,      │  │                │
│ │                  │  │                 │ DIFFRACTION │  │                │
│ │                  │  │                 │ ANGLE,      │  │                │
│ │                  │  │                 │ AND THE LIKE)│  │               │
│ │                  │  │                 └─────────────┘  │                │
│ └ ─ ─ ─ ─ ─ ─ ─ ─ ┘  └──────────────────────────────────┘               │
└─────────────────────────────────────────────────────────────────────────┘
```

## FIG. 2

LIMIT ON CALCULATION RANGE DUE
TO MAXIMUM DELAY TIME

BUILDING

$I_m$

Tx $I_0$ Rx

ELLIPSE FOR WHICH TRANSMISSION POINT
AND RECEPTION POINT ARE FOCAL POINTS

## FIG. 3

LIMIT ON CALCULATION RANGE DUE
TO ONLY VISIBLE BUILDINGS

RAY TRACING PATH

SEARCH
RANGE
Tx

Rx

SEARCH
RANGE

BUILDING
AS VISIBLE FROM Tx

BUILDING
AS VISIBLE FROM Rx

# FIG. 4

Top view

BUILDING

Tx'

Ir

Rx

SUR-
FACE
A

SURFACE VISIBLE
FROM BOTH Tx
AND Rx

Tx

DISCARD RAY Tx-Ir-Rx

# FIG. 5

Side view

SURFACE VISIBLE
FROM BOTH Tx AND Rx

SURFACE B

BLOCKED BY SURFACE
OF OTHER BUILDING

BUILDING
2

Tx'

Tx

Ir

BUILDING
1

Rx

DISCARD RAY Tx-Ir-Rx

CASE WHERE RAY Tx-Ir-Rx IS BLOCKED
BY SURFACE OF OTHER BUILDING

## FIG. 6

Top view

BUILDING

$d_2$

$d_1$

NORMAL REFLECTION DIRECTION

Tx

Rx

VISIBLE PORTION IS LARGER THAN FIRST FRESNEL ZONE
(CONCENTRATION IN NORMAL REFLECTION DIRECTION)

## FIG. 7

BUILDING

Top view

$d_2$

$d_1$

NORMAL REFLECTION DIRECTION

Tx

Rx

VISIBLE PORTION IS SMALLER THAN FIRST FRESNEL ZONE
(SCATTERING IN VARIOUS DIRECTIONS)

# FIG. 8

Top view

BUILDING

SURFACE A

TRACE AND CALCULATE PLURALITY
OF DIFFRACTED RAYS

Ir

Rx

Tx

DISCARD RAY Tx-Ir-Rx

CASE WHERE REFLECTION POINT Ir DOES NOT BELONG
TO SURFACE A

# FIG. 9

Side view

TRACE AND CALCULATE
DIFFRACTED RAY

SURFACE B

BUILDING
2

Tx

Ir

BUILDING
1

Rx

DISCARD RAY Tx-Ir-Rx

CASE WHERE RAY Tx-Ir-Rx IS BLOCKED
BY SURFACE OF OTHER BUILDING

# FIG. 10

Top view

| SURFACE B43 | | SURFACE B33 |
|---|---|---|

SURFACE B44  BUILDING B4  SURFACE B42  SURFACE B34  BUILDING B3  SURFACE B32

SURFACE B45  SURFACE B35

SURFACE B41  SURFACE B31

RECEPTION
POINT Rx ◯──────▶ VIEWING DIRECTION

SURFACE B13  SURFACE B23

SURFACE B14  BUILDING B1  SURFACE B12  SURFACE B24  BUILDING B2  SURFACE B22

SURFACE B15  SURFACE B25

SURFACE B11  SURFACE B21

VIEWING DIRECTION

◯

TRANSMISSION POINT Tx

# FIG. 11

IMAGE ELEMENTS (DOTS)
COLOR NUMERICAL VALUE IS #006881
COLOR OF SURFACE B41
COLOR OF SURFACE B34

1200 (HORIZONTAL)
800 (VERTICAL)

TWO-DIMENSIONAL IMAGE VIEWED FROM Tx

BACKGROUND COLOR

COLOR OF SURFACE B35
COLOR OF SURFACE B31
COLOR OF SURFACE B25
COLOR OF SURFACE B21

COLOR OF SURFACE B16

COMMONLY VISIBLE PORTION

COLOR OF SURFACE B11        COLOR OF SURFACE B24

TWO-DIMENSIONAL IMAGE VIEWED FROM Rx

COLOR OF SURFACE B34
COLOR OF SURFACE B44
COLOR OF SURFACE B41

COLOR OF SURFACE B14

COLOR OF SURFACE B31    COLOR OF SURFACE B24
COLOR OF SURFACE B23

# FIG. 12

RAY TRACING METHOD

Tx

DIFFRACTION POINT

Rx

$$D_{+1}(\phi, \phi_0; \beta_0) = \frac{-\exp\{i(\pi/4)\}}{2n\sqrt{2\pi k}\sin\beta_0}$$

$$\times \left[ \cot\left(\frac{\pi+(\phi-\phi_0)}{2n}\right) F[kLa^+(\phi-\phi_0)] \right.$$

$$+ \cot\left(\frac{\pi-(\phi-\phi_0)}{2n}\right) F[kLa^-(\phi-\phi_0)]$$

$$+ \left\{ \cot\left(\frac{\pi+(\phi+\phi_0)}{2n}\right) F[kLa^+(\phi+\phi_0)] \right.$$

$$+ \cot\left.\left.\left(\frac{\pi-(\phi+\phi_0)}{2n}\right) F[kLa^-(\phi+\phi_0)] \right\} \right]$$

EMBODIMENT

Top view

Tx

$\theta_t$

$\theta_r$

Rx

EXAMPLE OF SIMPLE EQUATION FOR ATTENUATION AMOUNT DUE TO DIFFRACTION

$$L_D = a * \theta_t + b * \theta_r + \cdots$$

# FIG. 13

**OVERVIEW OF DEEP LEARNING-BASED RADIOWAVE PROPAGATION ESTIMATION MODEL USING CNN**

PROPAGATION ENVIRONMENT ⇨ FEATURE EXTRACTION ⇨ FEATURE AMOUNT ⇨ PROPAGATION LOSS ESTIMATION ⇨ RESULT

AUTOMATE DETERMINATION OF MACHINE LEARNING PARAMETERS AND FUNCTION

⇩

URBAN STRUCTURE PARAMETER EXTRACTION UNIT          PROPAGATION ESTIMATION UNIT

MAP DATA ⇨ CONVOLUTIONAL NN(CNN) ⇨ URBAN STRUCTURE PARAMETERS ⇨ FULLY CONNECTED NN (FNN) ⇨ PROPAGATION CHARACTE-RISTIC

SYSTEM PARAMETERS

BUILDING OCCUPANCY SURFACE AREA RATIO, ROAD WIDTH, ROAD ANGLE, ROADSIDE BUILDING HEIGHT, AVERAGE BUILDING HEIGHT, AND BUILDING HEIGHT NEAR BASE STATION

TRANSMISSION-RECEPTION DISTANCE, FREQUENCY, BASE STATION AND MOBILE STATION ANTENNA HEIGHTS, VISIBLE OR NOT VISIBLE ETC.

⇩

URBAN STRUCTURE PARAMETER EXTRACTION UNIT          PROPAGATION ESTIMATION UNIT

(INPUT)  $C_0$  $P_0$  $C_1$  $P_1$  $C_2$  $C_3$      $F_0$  $F_1$  (OUTPUT) (INPUT)  $F_2$  $F_3$

MAP DATA

(OUTPUT)

(SYSTEM PARAMETERS) ⇨

BUILDING MAP (BUILDING HEIGHT)
VISIBLE MAP

$N_m$

MS

EP 4 362 359 A1

# FIG. 14

**(1) IMAGE (MAP) VIEWED FROM Tx**

256 (VERTICAL)  256 (HORIZONTAL)  COLOR OF SURFACE B34

BACKGROUND COLOR

COLOR OF SURFACE B41

COLOR OF SURFACE B15

COLOR OF SURFACE B11

COLOR OF SURFACE B35

COLOR OF SURFACE B31

COLOR OF SURFACE B25

COLOR OF SURFACE B21

COLOR OF SURFACE B24

**(3) IMAGE (MAP) VIEWED FROM Rx**

COLOR OF SURFACE B41    COLOR OF SURFACE B31

COLOR OF SURFACE B14

COLOR OF SURFACE B44    COLOR OF SURFACE B34

**(2) IMAGE (MAP) VIEWED FROM Tx**

256

256

DISTANCE

**(4) IMAGE (MAP) VIEWED FROM Rx**

DISTANCE

EP 4 362 359 A1

## FIG. 15

URBAN STRUCTURE PARAMETER EXTRACTION UNIT

PROPAGATION ESTIMATION UNIT

(INPUT)

MAP OF STRUCTURE VIEWED FROM Tx
(1 SET: (1) RGB & (2))

256  $C_0$  252  $P_0$  63  $C_1$  60  $P_1$  $C_2$  12  $C_3$  9

5  5  4  4  4  4  4  4  15  24  12  12  6

256  252  63  60  15  24  12  9

set × 4  48  48

MAP OF STRUCTURE VIEWED FROM Rx
(1 SET: (3) RGB & (4))

256  $C_0$  252  $P_0$  63  $C_1$  60  $P_1$  $C_2$  12  $C_3$  9

5  5  4  4  4  4  4  4  15  24  12  12  6

256  252  63  60  15  24  12  9

48  48

(OUTPUT)  (INPUT)

$F_0$  $F_1$  $F_2$  $F_3$

(OUTPUT)

972  972  972

(SYSTEM PARAMETERS)
TRANSMISSION-RECEPTION DISTANCE, FREQUENCY,
BASE STATION AND MOBILE STATION ANTENNA HEIGHTS,
VISIBLE OR NOT VISIBLE ETC.

EP 4 362 359 A1

# FIG. 16

| IMAGE VIEWED FROM TRANSMISSION POINT | IMAGE VIEWED FROM RECEPTION POINT |
|---|---|

·COMMONLY VISIBLE COLOR
(WALL SURFACE OF STRUCTURE OR THE LIKE)
·PIXEL COUNT OF COMMONLY VISIBLE COLOR
-CASE VIEWED FROM TRANSMISSION POINT : $Tx_{pixels}$
-CASE VIEWED FROM RECEPTION POINT : $Rx_{pixels}$

# FIG. 17

COMMONLY VISIBLE WALL SURFACE

RECEPTION POINT

TRANSMISSION POINT

RECEIVED RADIOWAVE STRENGTH $\alpha$ $Tx_{pixels} * Rx_{pixels}$

# FIG. 18

EXAMPLE OF GROUPING OF SCATTERING OBJECTS

# FIG. 19

ONE COLOR FOR WHOLE SURFACE

DIFFERENT COLOR FOR EVERY SURFACE MESH

# FIG. 20

SINGLE REFLECTION (SCATTERING) CASE

N REFLECTIONS (SCATTERING) CASE

## FIG. 21A

RECEPTION POINT

## FIG. 21B

STRUCTURE — RECEPTION POINT Rx3

Tx
TRANSMISSION
POINT

RECEPTION POINT Rx2

RECEPTION POINT Rx1

# FIG. 22

DIFFRACTED WAVE CALCULATION METHOD

Top view

Tx

STRUCTURE

$\theta_t$

EXAMPLE OF SIMPLE EQUATION
FOR ATTENUATION AMOUNT DUE
TO DIFFRACTION

$$L_D = a * \theta_t + b * \theta_r + \cdots$$

$\theta_r$

Rx

# FIG. 23A

~220

### STORAGE UNIT

**MAP DATABASE**

MAP

**TOPOGRAPHY DATABASE**

TOPOGRAPHICAL ELEVATION

**RECEPTION POINT ACQUISITION GEOGRAPHICAL DATABASES**

ROAD NETWORK

HIGH-SPEED ROAD VIADUCT

RAILWAY STATION VIADUCT

SIDEWALK NETWORK

PUBLIC PARK/FOREST

ROADSIDE TREES

AND THE LIKE

**IDENTIFICATION NUMBER/COLOR DATABASE**

IDENTIFICATION NUMBER/COLOR

Ⓐ

**RADIOWAVE SCATTERING CONTRIBUTING OBJECT DATABASES**

BUILDINGS

UTILITY POLES, STREET LAMPS

ROAD SIGNS

FURNITURE

AND THE LIKE

**CALCULATED RECEPTION POINT DATABASES**

RECEPTION POSITION

IMAGE VIEWED FROM RECEPTION POINT

ANALYSIS RESULTS FOR IMAGE VIEWED FROM RECEPTION POINT

AND THE LIKE

Ⓑ

**TRANSMISSION POINT DATABASES**

TRANS-MISSION POSITION

ANTENNA

IMAGE VIEWED FROM TRANS-MISSION POINT

ANALYSIS RESULTS FOR IMAGE VIEWED FROM TRANSMISSION POINT

RADIOWAVE SCATTERING LEVEL CALCULATION INFORMATION

AND THE LIKE

FIG. 23B

230

CALCULATION UNIT

200

231

PRE-PROCESSING UNIT

CALCULATION CONDITION SETTING UNIT

TOPOGRAPHICAL INFORMATION
PROCESSING UNIT

RECEPTION POINT CALCULATION UNIT

RADIOWAVE SCATTERING CONTRIBUTING
OBJECT SURFACE COLORING
OR IDENTIFICATION NUMBER
ASSOCIATING UNIT

CREATION UNIT FOR IMAGE VIEWED
FROM RECEPTION POINT

ANALYSIS UNIT FOR IMAGE VIEWED
FROM RECEPTION POINT

(A)

210

EXTERNAL
INPUT UNIT

CAMERA,
LASER
SCANNER,
AND THE LIKE

232

POST-PROCESSING UNIT

POST-PROCESSING CONDITION
SETTING UNIT

CREATION UNIT FOR IMAGE VIEWED
FROM TRANSMISSION POINT

ANALYSIS UNIT FOR IMAGE VIEWED
FROM TRANSMISSION POINT

COMPARISON UNIT COMPARING
ANALYSIS RESULT FOR IMAGE VIEWED
FROM TRANSMISSION POINT
WITH ANALYSIS RESULT FOR IMAGE
VIEWED FROM RECEPTION POINT

PROPAGATION CALCULATION UNIT

(B)

240

OUTPUT UNIT

## FIG. 24

INITIATION AND START

MAP DB ----> READ AND DISPLAY MAP

USE PAST
PRE-PROCESSING
RESULT?  YES -->

NO ↓

PERFORM
<-- NO   PRE-PROCESSING?

YES

·DESIGNATE TARGET AREA
·INPUT RECEPTION POINT
CONDITIONS
·SELECT TOPOGRAPHICAL DB
·SELECT RECEPTION POINT
ACQUISITION GEOGRAPHICAL
DATABASE
·SELECT RADIOWAVE
SCATTERING CONTRIBUTING
OBJECT DATABASE

SET CALCULATION
CONDITIONS

TOPOGRAPHICAL
INFORMATION PROCESSING  <---- TOPOGRAPHICAL ELEVATION DB

RECEPTION POINT DB <---- CALCULATE RECEPTION POINT <---- RECEPTION POINT ACQUISITION GEOGRAPHICAL DB

COLOR RADIOWAVE
SCATTERING CONTRIBUTING
OBJECT SURFACE OR
ASSOCIATE IDENTIFICATION
NUMBER THEREWITH  <---- RADIOWAVE SCATTERING CONTRIBUTIN OBJECT DB

IDENTIFICATION NUMBER/COLOR DB

IMAGE VIEWED
FROM RECEPTION POINT DB <---- CREATE IMAGE VIEWED FROM RECEPTION POINT

ANALYZE IMAGE VIEWED
FROM RECEPTION POINT ----> ANALYSIS RESULTS FOR IMAGE VIEWED FROM RECEPTION POINT DB

END

46

**FIG. 25**

EP 4 362 359 A1

# FIG. 26A

INITIATION AND START

MAP DB ⤏ READ AND DISPLAY MAP

USE PAST PRE-PROCESSING RESULT? —YES→

NO

PERFORM PRE-PROCESSING?

NO

YES

RECEPTION POINT DB ⟵ DESIGNATE RECEPTION POINT ⟵ TOPOGRAPHICAL ELEVATION DB

SET CALCULATION CONDITION

COLOR RADIOWAVE SCATTERING CONTRIBUTING OBJECT SURFACE OR ASSOCIATE IDENTIFICATION NUMBER THEREWITH ⟷ RADIOWAVE SCATTERING CONTRIBUTING OBJECT DB

IMAGE VIEWED FROM RECEPTION POINT DB ⟵ CREATE IMAGE VIEWED FROM RECEPTION POINT ⟵ IDENTIFICATION NUMBER/COLOR DB

ANALYZE IMAGE VIEWED FROM RECEPTION POINT ⤏ ANALYSIS RESULTS FOR IMAGE VIEWED FROM RECEPTION POINT DB

C

# FIG. 26B

EP 4 362 359 A1

## FIG. 27

$$P_r = \sum_i P_{ri}$$

$$P_{ri} = K_i * Tx_{i\_pixels} * Rx_{i\_pixels}$$

## FIG. 28

IMAGE OF CHANNEL CHARACTERISTIC AT RECEPTION POINT

# FIG. 29

DETECT RADIOWAVE SCATTERING OBJECT (OBJECT TYPE, POSITION OR THE LIKE) NOT PRESENT IN DB BY USING POSITIONS OF TRANSMISSION AND RECEPTION POINTS, OR CAMERA, LIDAR, AND SONAR OR THE LIKE IN THE VICINITY

| METHOD 1: USE EXISTING ROUGH MODEL | METHOD 2: USE EXISTING DETAILED MODEL | METHOD 3: CREATE AND USE MODEL IN REAL TIME |
|---|---|---|
| RECOGNIZE OBJECT USING CAMERA IMAGE RECOGNITION TECHNOLOGY | CREATE POINT GROUP OF SCATTERING OBJECT USING LIDAR OR THE LIKE. USE POINT GROUP TO EXTRACT SURFACES AND MESHES CONSTITUTING SCATTERING OBJECT | CREATE POINT GROUP OF SCATTERING OBJECT USING LIDAR OR THE LIKE. USE POINT GROUP TO EXTRACT SURFACES AND MESHES CONSTITUTING SCATTERING OBJECT |
| SELECT ALREADY PREPARED ROUGH MODEL FOR OBJECT (MODEL CONFIGURED BY SURFACES, EXAMPLE, VEHICLE, PERSON) | CREATE MODEL OF SCATTERING OBJECT CONFIGURED BY SURFACES, AND STORE IN DB | CREATE MODEL OF SCATTERING OBJECT CONFIGURED BY SURFACES, AND STORE IN DB |
| READ OBJECT MODEL, USE DIFFERENT COLOR FOR EVERY SURFACE | USE DIFFERENT COLORS FOR OBJECT MODEL SURFACES | USE DIFFERENT COLORS FOR OBJECT MODEL SURFACES |
| IN CASE OF MOVING OBJECT, TRACK POSITION, ADJUST OBJECT MODEL POSITION | IN CASE OF MOVING OBJECT, TRACK POSITION, ADJUST OBJECT MODEL POSITION | |
| SUBSEQUENTLY CALCULATE PROPAGATION CHARACTERISTIC BY USING COLOR IMAGING METHOD | SUBSEQUENTLY CALCULATE PROPAGATION CHARACTERISTIC BY USING COLOR IMAGING METHOD | SUBSEQUENTLY CALCULATE PROPAGATION CHARACTERISTIC BY USING COLOR IMAGING METHOD |

## FIG. 30A

## FIG. 30B

VEHICLE MODEL 1

PEOPLE MODEL

## FIG. 30C

VEHICLE MODEL 1

PEOPLE MODEL

EP 4 362 359 A1

# FIG. 31A

METASURFACE-REFLECTED
WAVE

RIS USING DYNAMIC METASURFACE

# FIG. 31B

53

# FIG. 32

## INTERNATIONAL SEARCH REPORT

| International application No. |
| --- |
| **PCT/IB2022/057395** |

**A. CLASSIFICATION OF SUBJECT MATTER**

*H04B 17/309*(2015.01)i; *H04B 17/373*(2015.01)i; *H04B 17/391*(2015.01)i; *H04W 16/18*(2009.01)i; *H04W 16/22*(2009.01)i; *H04W 24/06*(2009.01)i

FI: H04B17/309; H04B17/373; H04B17/391; H04W16/18; H04W16/18 110; H04W16/22; H04W24/06

According to International Patent Classification (IPC) or to both national classification and IPC

**B. FIELDS SEARCHED**

Minimum documentation searched (classification system followed by classification symbols)

H04B17/309; H04B17/373; H04B17/391; H04W16/18; H04W16/22; H04W24/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2005-341621 A (NEC CORP) 08 December 2005 (2005-12-08)<br>paragraph [0047] | 1-11 |
| A | JP 2003-318811 A (NIPPON TELEGR & TELEPH CORP) 07 November 2003 (2003-11-07)<br>paragraphs [0040]-[0041], fig. 4 | 1-11 |
| A | JP 2019-205127 A (NTT DOCOMO INC) 28 November 2019 (2019-11-28)<br>paragraphs [0014]-[0024] | 1-11 |
| A | JP 2005-274205 A (NATIONAL INSTITUTE OF INFORMATION & COMMUNICATIONTECHNOLOGY) 06 October 2005 (2005-10-06)<br>paragraphs [0021]-[0027], [0035], [0039], fig. 5 | 1-11 |
| A | US 6477376 B1 (AT&T WIRELESS SERVICES, INC.) 05 November 2002 (2002-11-05)<br>column 13, lines 43-48 | 1-11 |
| A | US 2019/0220003 A1 (INTEL CORPORATION) 18 July 2019 (2019-07-18)<br>paragraph [0047] | 1-11 |

☑ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **19 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/IB2022/057395** |

**C.    DOCUMENTS CONSIDERED TO BE RELEVANT**

| Category* | Citation of document, with indication, where appropriate, of the relevant passages | Relevant to claim No. |
| --- | --- | --- |
| A | 今井 哲朗, 奥村 幸彦, ディー・ブラー・ニングを用いた電波伝搬推定に関する一検討, 電子情報通信学会２０１８年総合大会講演論文集 通信１, 06 March 2018 (2018-03-06), p. 28, ISSN 1349-1369, <br> in particular, fig. 1, (IMAI, Tetsuro. OKUMURA, Yukihiko. A Study on Radio Propagation Prediction by Using Deep Learning.), non-official translation (Lecture proceedings of the 2018 general conference of Institute of Electronics, Information and Communication Engineers: Communication 1) | 1-11 |

Form PCT/ISA/210 (second sheet) (January 2015)

**INTERNATIONAL SEARCH REPORT**

International application No.

**PCT/IB2022/057395**

| Box No. III | Observations where unity of invention is lacking (Continuation of item 3 of first sheet) |
|---|---|

1. ☐   As all required additional search fees were timely paid by the applicant, this international search report covers all searchable claims.

2. ☐   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☑   No required additional search fees were timely paid by the applicant. Consequently, this international search report is restricted to the invention first mentioned in the claims; it is covered by claims Nos.: **clams 1-11**

**Remark on Protest**

☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (January 2015)

**INTERNATIONAL SEARCH REPORT**

International application No.

**PCT/IB2022/057395**

| Box No. III | Observations where unity of invention is lacking (Continuation of item 3 of first sheet) |
|---|---|

This International Searching Authority found multiple inventions in this international application, as follows:

(1)
The present international application includes the following three inventions that do not comply with the requirement of unity of invention.

Main invention: Invention in claims 1-11
First additional invention: Invention in claims 12-13
Second additional invention: Invention in claims 14-15

(2)
The special technical feature of the invention in claims 1-11 is to estimate the propagation characteristics of radio waves by using information that is included in map data and represents the structural features of an object shown from both sides of a transmission point and a reception point.

The special technical feature of the invention in claims 12-13 is to estimate the propagation characteristics of radio waves, involving the diffraction calculation of the radio waves in the surrounding environment on the basis of 2-dimensional data extracted from 3-dimensional map data.

The special technical feature of the invention in claims 14-15 is to estimate the propagation characteristics of the radio waves by applying fully-connected neural network to a first parameter and a second parameter, wherein the first parameter represents the structure that may interfere with the radio waves, the second parameter represents the configuration of a wireless communication system, and these parameter are extracted by applying convolution neural network to the map data.

(3)
The invention in claims 1-11 and the invention in claims 12-13 share the common technical feature of estimating the propagation characteristics of radio waves by using map data. However, this technical feature is disclosed in fig. 1 of non-patent document 1 cited in paragraph [0007] of the international application and does not make a contribution over the prior art, and is thus not a "special" technical feature.

The invention in claims 1-11 and the invention in claims 14-15 share the common technical feature of estimating the propagation characteristics of radio waves by using map data. Therefore, the common technical feature between the invention in claims 1-11 and the invention in claims 14-15 is also not a "special" technical feature.

The invention in claims 12-13 and the invention in claims 14-15 share the common technical feature of estimating the propagation characteristics of radio waves by using map data. Therefore, the common technical feature between the invention in claims 12-13 and the invention in claims 14-15 is also not a "special" technical feature.

(4)
On the basis of the above features, it cannot be said that there is a technical relationship that involves the same or corresponding special technical feature between the invention in claims 1-11, the invention in claims 12-13, and the invention in claims 14-15.

Form PCT/ISA/210 (continuation of first sheet) (January 2015)

| INTERNATIONAL SEARCH REPORT | | International application No. |
|---|---|---|
| Information on patent family members | | **PCT/IB2022/057395** |

| Patent document cited in search report | | | Publication date (day/month/year) | Patent family member(s) | | | Publication date (day/month/year) |
|---|---|---|---|---|---|---|---|
| JP | 2005-341621 | A | 08 December 2005 | (Family: none) | | | |
| JP | 2003-318811 | A | 07 November 2003 | (Family: none) | | | |
| JP | 2019-205127 | A | 28 November 2019 | (Family: none) | | | |
| JP | 2005-274205 | A | 06 October 2005 | (Family: none) | | | |
| US | 6477376 | B1 | 05 November 2002 | (Family: none) | | | |
| US | 2019/0220003 | A1 | 18 July 2019 | DE | 102020103512 | A1 | |
| | | | | CN | 111754625 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2019122008 A

**Non-patent literature cited in the description**

• **TETSUROU IMAI ; YUKIHIKO OKUMURA.** A Study on Radio Propagation Prediction by Using Deep Learning. *IEICE Technical Report, AP2017-165,* January 2018, 81-86

• **TETSUROU IMAI ; TAKAHIRO ASAI.** A Study on Radio Propagation Prediction by Using Deep Learning with CNN - Relationship between Prediction Accuracy and Input Map-Parameters. *IEICE Technical Report,* October 2018, vol. 118 (246), 1-6